(19)

Europäisches Patentamt
European Patent Office
Office européen des brevets

(11) **EP 1 867 896 A2**

(12) **EUROPEAN PATENT APPLICATION**

(43) Date of publication:
**19.12.2007 Bulletin 2007/51**

(51) Int Cl.:
**F16H 61/662** (2006.01)

(21) Application number: **07252428.3**

(22) Date of filing: **14.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **15.06.2006 JP 2006166709**
**27.07.2006 JP 2006205379**

(71) Applicant: **Toyota Jidosha Kabushiki Kaisha**
**Toyota-shi, Aichi-ken, 471-8571 (JP)**

(72) Inventors:
• **Toyoda, Shinya**
**Toyota-shi**
**Aichi-ken 471-8571 (JP)**
• **Taniguchi, Hiroji**
**Toyota-shi**
**Aichi-ken 471-8571 (JP)**
• **Soga, Yoshinobu**
**Toyota-shi**
**Aichi-ken 471-8571 (JP)**

• **Matsui, Yasunari**
**Toyota-shi**
**Aichi-ken 471-8571 (JP)**
• **Tamura, Tadashi**
**Toyota-shi**
**Aichi-ken 471-8571 (JP)**
• **Hino, Akira**
**Toyota-shi**
**Aichi-ken 471-8571 (JP)**
• **Tanaka, Naoto**
**Toyota-shi**
**Aichi-ken 471-8571 (JP)**
• **Matsuo, Kenji**
**Toyota-shi**
**Aichi-ken 471-8571 (JP)**

(74) Representative: **Harris, Ian Richard**
**D Young & Co**
**120 Holborn**
**London EC1N 2DY (GB)**

(54) **Device and method of controlling a belt-type continuously variable transmission**

(57)     The line oil pressure $P_L$ that is a basic pressure of a needed Pin pressure and a Pd pressure is set by line oil pressure setting means (160) on the basis of the higher oil pressure of the oil pressure values obtained by adding reference margin values EX to the needed Pin pressure and the to Pd pressure. Therefore, a requirement minimum line oil pressure $P_L$ with respect to the needed Pin pressure needed for shifting and the Pd pressure needed for the belt clamping pressure is appropriately set so that good shifting performance and good belt clamping pressure are secured.

FIG.6

EP 1 867 896 A2

## Description

BACKGROUND OF THE INVENTION

1. Held of Invention

The invention relates to a control device and a control method of a belt type continuously variable transmission having a pair of pulleys whose effective diameters are changed by hydraulic cylinders, and a drive belt that is wrapped around the pair of pulleys. In particular, the invention relates to the setting of the basic pressure of the oil pressures in hydraulic cylinders of the belt type continuously variable transmission.

2. Description of Related Art

In conjunction with a control device of a belt type continuously variable transmission having a pair of pulleys whose effective diameters are changed by hydraulic cylinders, and a drive belt that is wrapped around the two pulleys, it is known that the basic pressure of the oil pressures in hydraulic cylinders is properly set.

An example of the technology is a hydraulic control device of a hydraulically operated transmission described in Japanese Patent Application Publication No. JP-A-6-109114 (hereinafter, JP-A-6-109114). JP-A-6-109114 describes a continuously variable transmission that has a primary pulley, a secondary pulley, and a belt that is wrapped around the two pulleys. In the described continuously variable transmission, the speed change ratio via the primary pulley, and the belt clamping pressure via the secondary pulley are controlled so that slip does not occur between the belt and the two pulleys. In conjunction with this continuously variable transmission, JP-A-6-109114 describes a hydraulic control device that reliably prevents belt slip while improving fuel economy, by setting the line pressure, which is the basic pressure of the oil pressure in a primary pulley oil chamber (hereinafter, referred to as "primary oil pressure") and of the oil pressure in the secondary pulley oil chamber (hereinafter, referred to as "secondary oil pressure"), based on the engine torque and the speed change ratio.

In the hydraulic control device described in JP-A-6-109114, a hydraulic circuit is constructed so that the line pressure is directly introduced into the secondary pulley oil chamber, and the line pressure and the secondary oil pressure are controlled substantially as the same pressure. Therefore, although the line pressure needed for the secondary oil pressure is secured, the shift response may deteriorate when the line pressure is lower than the needed primary oil pressure. That is, the line pressure is not determined only by the secondary oil pressure, i.e., the belt clamping pressure, but needs to be set so that good shifting performance and good belt clamping pressure can be secured.

To this end, a hydraulic circuit may be constructed so that the line pressure is singly controllable regardless of the primary oil pressure or the secondary oil pressure. However, no proposal has been produced as to how to set the line pressure and secure good shifting performance and good belt clamping pressure in the case where the line pressure can be singly controlled.

SUMMARY OF THE INVENTION

The invention provides a control device for a belt type continuously variable transmission that secures good shifting performance and good belt clamping pressure by appropriately setting the basic pressure of the oil pressures in hydraulic cylinders.

A first aspect of the invention relates to a control device for a belt type continuously variable transmission. In a vehicle equipped with a continuously variable transmission having a primary pulley, a secondary pulley and a belt that is wrapped around the two pulleys disposed on a power transmission path between a vehicle power source and a driving wheel, the acontrol device for the belt type continuously variable transmission includes a primary hydraulic cylinder that adjusts the groove width of the primary pulley, and a secondary hydraulic cylinderthat adjusts the groove width of the secondary pulley, and controls a speed change ratio by the primary pulley hydraulic cylinder and controls a belt clamping pressure by the secondary pulley hydraulic cylinder so that slip does not occur between the belt and the two pulleys. The control device includes basic pressure setting means for setting a basic oil pressure in the primary pulley hydraulic cylinder and the secondary pulley hydraulic cylinder based on the higher oil pressure either of the oil pressure in the primary hydraulic cylinder or the secondary hydraulic cylinder.

Due to this construction, the basic oil pressure in the primary hydraulic cylinder and in the secondary hydraulic cylinder is set by the basic pressure setting means based on the higher of the oil pressure in either the primary hydraulic cylinder or the secondary hydraulic cylinder. Hence, a required minimum basic pressure is appropriately set with respect to the oil pressure in the primary hydraulic cylinder, which pressure needed for shifting, and the oil pressure in the secondary hydraulic cylinder, which pressure needed for the belt clamping pressure, so that good shifting function and good belt clamping pressure are secured.

The basic pressure setting means may set the basic pressure based on the higher of the oil pressures obtained by adding predetermined margin values to the oil pressure in the primary hydraulic cylinder and the secondary hydraulic cylinder, respectively. Due to this construction, appropriate basic pressure factoring in the control accuracy of the actual basic pressure and the state of the vehicle is set.

The predetermined margin values set for the oil pressure in the primary hydraulic cylinder and in the secondary hydraulic cylinder may differ from each other. With this construction, margin values factoring in the difference between the manners of controlling the oil pressure in the primary hydraulic cylinder and the oil pressure in the secondary hydraulic cylinder are set, and therefore an appropriate basic pressure is set. For example, when the oil pressure in the hydraulic cylinder is directly controlled, only the dispersion of the actual line pressure with respect to the set basic pressure needs to be factored in, and therefore relatively small margin values are set. Alternatively, when the oil pressure in the hydraulic cylinder is not directly controlled but is an estimated value, there is a need to factor in errors of the estimated value and the like as well, so that relatively large margin values are set.

When the control accuracy of an actual basic pressure with respect to the basic pressure set by the basic pressure setting device declines, the predetermined margin values may be set larger than when the control accuracy is high. Due to this construction, an appropriate basic pressure is set even when the control accuracy of the actual basic pressure declines. Because the viscosity of the working oil is high when the temperature of the working oil is low, the control accuracy of the actual basic pressure becomes lower than at the time of ordinary oil temperature. Therefore, because the predetermined margin values are set larger when the temperature of the working oil low than when oil temperature is normal, appropriate basic pressure is set even when the control accuracy of the actual basic pressure declines. Furthermore, even when the viscosity of the working oil is low, such as when the temperature of the oil is high, the control accuracy of the actual basic pressure may decline in some cases. In such a case, since the predetermined margin values are set larger at the time of high temperature of the working oil than at the time of ordinary oil temperature, appropriate basic pressure is set even when the control accuracy of the actual basic pressure declines.

The predetermined margin values may be set larger at a time of running of the vehicle during which an abrupt shift is needed than at a time of normal steady running of the vehicle. Due to this construction, appropriate basic pressure is set even at the time of an abrupt shift is made.

The predetermined margin values may be set smaller when the belt transmission torque does not sharply change while the vehicle is running than during normal steady running of the vehicle. Due to this construction, when the belt transmission torque does not sharply change while the vehicle is running, that is, there is no need for sharp acceleration or deceleration and therefore the predetermined margin values may bereduced, for example, during execution of the cruise_control or the like, the basic pressure is set lower than at the time of normal steady running. Thus, further improving the fuel economy.

The control device may further include primary oil pressure estimation means for estimating the oil pressure in the primary hydraulic cylinder, wherein if the oil pressure cannot be accurately estimated by the primary oil pressure estimation, the basic pressure setting means sets the basic pressure based on the oil pressure in the secondary hydraulic cylinder. Due to this construction, when the needed Pin pressure cannot be accurately estimated, for example, when a rotation sensor fails, during a transition in an abrupt shift, such as a power-on downshift, a power-off upshift or the like, or at the time of a manual shift, appropriate basic pressure is set based on only the oil pressure in the secondary hydraulic cylinder, so that the deterioration in the shift responsiveness is minimized.

During an abrupt shift, the basic pressure setting means may set the basic pressure based on the oil pressure in the secondary hydraulic cylinder. Due to this construction, appropriate basic pressure may be set even during an abrupt shift, such as a power-on downshift, a power-off upshift or the like, during which the oil pressure in the primary hydraulic cylinder cannot be accurately estimated.

The basic pressure setting means may set an upper limit value of the basic pressure based on a permissible load of the belt, and may set a basic pressure that is lower than or equal to the upper limit value.

A second aspect of the invention relates to a method of controlling a belt type continuously variable transmission. In a vehicle equipped with a continuously variable transmission, having a primary pulley, a secondary pulley and a belt that is wrapped around the two pulleys, that is disposed on a power transmission path between a vehicle power source and a driving wheel, the control method is for use in the belt type continuously variable transmission that includes a primary pulley hydraulic cylinder for altering a groove width of the primary pulley, and a secondary pulley hydraulic cylinder that alters the groove width of the secondary pulley. The control method controls a speed change ratio by the primary hydraulic cylinder and controls a belt clamping pressure by the secondary hydraulic cylinder so that slip does not occur between the belt and the two pulleys. The control method involves the setting of a basic oil pressure in the primary cylinder and in the secondary hydraulic cylinder based on the higher oil pressure of either the oil pressure in the primary hydraulic cylinder or the secondary hydraulic cylinder.

An ordinary shift control of the continuously variable transmission may adopt various manners of control, for example, a manner in which a target speed change ratio is found in accordance with a predetermined shift condition, and the speed change ratio is feedback-controlled so that the actual speed change ratio reaches the target speed change ratio, by altering the groove width of the primary pulley through the supply and discharge of the working oil with respect to the primary pulley hydraulic cylinder, a manner in which a target rotational speed of the input side (drive source side) is found in accordance with the vehicle speed, the output rotational speed (driving wheel-side rotational speed), etc., and the speed change ratio is feedback-controlled so that the actual input rotational speed reaches the target input rotational speed, by altering the groove width of the primary pulley through the supply and discharge of the working oil with respect to the primary pulley hydraulic cylinder, etc.

The aforementioned predetermined shift condition is set, for example, through the use of a map, a computational expression or the like in which parameters are states of operation of the vehicle, including the driver's requested output amount (requested acceleration amount), such as the accelerator operation amount or the like, the vehicle speed (corresponding to the output rotational speed), etc.

As the vehicle power source, an internal combustion engine, such as a gasoline engine, a diesel engine, etc., is widely used. In addition to the aforementioned engine, an electric motor or the like may be used as an auxiliary vehicle power source. It is also allowable to use only an electric motor as the vehicle power source.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a diagram illustrating a vehicular driving device in accordance with a first embodiment of the invention;

FIG. 2 is a block diagram illustrating portions of a control system provided in a vehicle for controlling the vehicular driving device shown in FIG. 1, and the like;

FIG. 3 is a hydraulic circuit diagram showing portions of a hydraulic control circuit that are relevant to a belt clamping pressure control of a continuously variable transmission, a speed change ratio control, and an engagement oil pressure control for a forward-travel clutch or a reverse-travel brake in association with operation of a shift lever;

FIG. 4 is a diagram showing an example of a map that is used to find a target input rotational speed in the shift control of the continuously variable transmission;

FIG. 5 is a diagram showing an example of a belt clamping pressure force map for finding a belt clamping pressure in accordance with the speed change ratio and the like in a clamping pressure force control of the continuously variable transmission;

FIG. 6 is a functional block diagram illustrating portions of control functions of an electronic control device shown in FIG. 2;

FIG 7 is a diagram for illustrating an example of the concept of setting the line oil pressure;

FIG 8 is a diagram showing an example of pre-stored experimentally determined relationship (engine torque map) between the engine speed and the estimated engine torque with the throttle valve opening degree being a parameter;

FIG 9 is a diagram showing an example of a reference margin value that is reduced during execution of the cruise control then during non-execution of the cruise control;

FIG 10 is a flowchart illustrating portions of control operations of an electronic control device shown in FIG 2, that is, illustrating a control operation for appropriately setting the line oil pressure on the basis of the needed Pin pressure and the Pd pressure;

FIG 11 is a diagram illustrating an example of the concept of setting the line oil pressure when the needed Pin pressure cannot be accurately estimated;

FIG. 12 is a functional block diagram illustrating portions of control functions of the electronic control device shown in FIG. 2, in accordance with the second embodiment; and

FIG 13 is a flowchart illustrating portions of control operations of the electronic control device shown in FIG 2, in accordance with the second embodiment, that is, illustrating a control operation for appropriately setting the iine oil pressure.

DETAILED DESCRIPTION OF THE PREFERRED EMBODIMENTS

Hereinafter, embodiments of the invention will be described in detail with reference to the drawings.

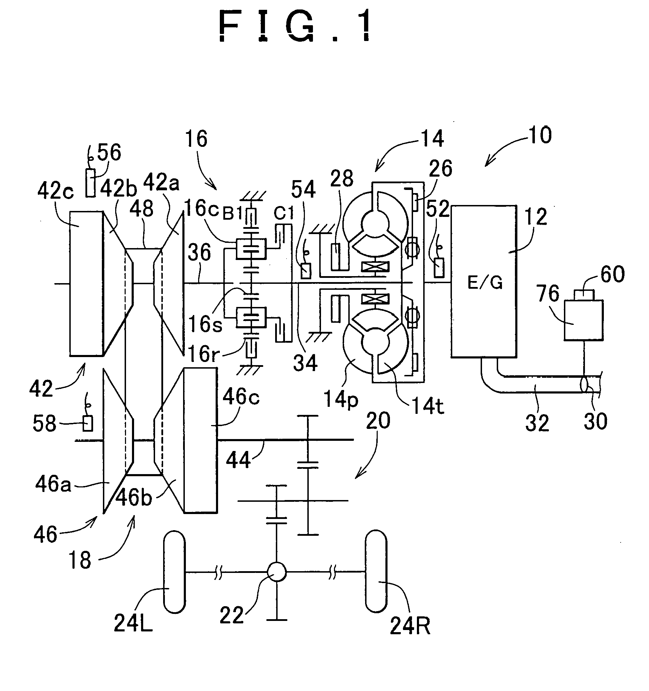

FIG 1 is a diagram illustrating the construction of a vehicular driving device 10 in accordance with a first embodiment of the invention. The vehicular driving device 10 is a transversely mounted type automatic transmission that is suitably adopted in FF (front engine, front wheel drive) type vehicles, and has an engine 12 as a vehicle power source. The output of the engine 12, constructed of an internal combustion engine, is transmitted from the crankshaft of the engine 12 through a torque converter 14 (i.e., fluid type transmission device), a forward/reverse travel switch device 16, a belt type continuously variable transmission (CVT) 18, and a speed reduction gear device 20 to a differential gear device 22, and then is distributed to left and right driving wheels 24L, 24R.

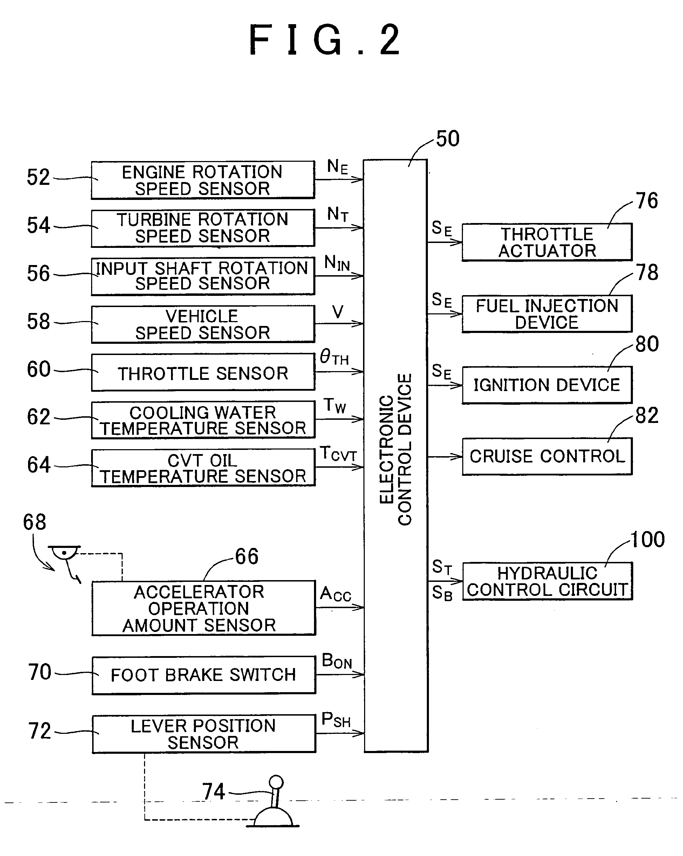

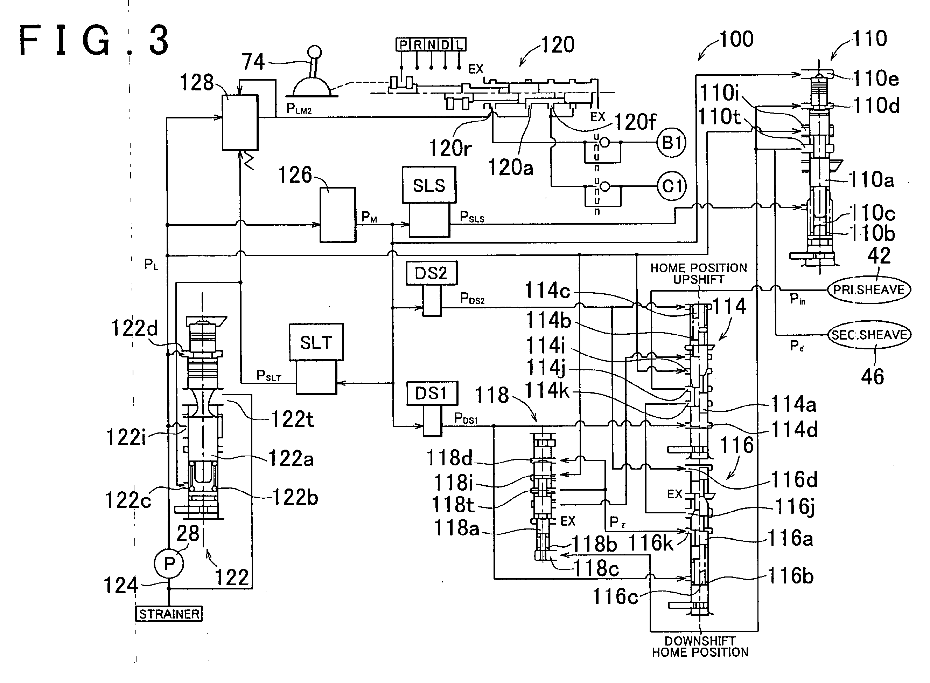

The torque converter 14 includes a pump impeller 14p linked to the crankshaft of the engine 12, and a turbine impeller 14t linked to the forward/reverse travel switch device 16 via a turbine shaft 34 that corresponds to an output-side member of the torque converter 14, and is designed to transmit power via fluid. A lockup clutch 26 is provided between the pump impeller 14p and the turbine impeller 14t of the torque converter 14. The lockup clutch 26 is engaged or released in accordance with the supply of oil pressure to an engagement oil chamber_and a release oil chamber, which are switched by a lockup control valve (L/C control valve) (not shown) provided in a hydraulic control circuit 100 (see FIGS. 2 and 3), and the like. When the lockup clutch 26 is completely engaged, the pump impeller 14p and the turbine impeller 14t rotate integrally as one unit. A mechanical oil pump 28 is linked to the pump impeller 14p. The oil pump 28 generates the oil pressure for performing the shift control of the continuously variable transmission 18, or producing the belt clamping pressure, or performing the engagement/release control of the lockup clutch 26, or supplying lubricating oil to various portions, as the oil pump 28 is rotationally driven by the engine 12.

The forward/reverse travel switch device 16 is constructed of mainly of a double-pinion type planetary gear device. The turbine shaft 34 of the torque converter 14 is integrally linked to a sun gear 16s, and an input shaft 36 of the continuously variable transmission 18 is integrally linked to a carrier 16c. The carrier 16c and the sun gear 16s are selectively linked to each other via a forward-travel clutch C1. A ring gear 16r is selectively fixed to a housing via a reverse-travel brake B1. The forward-travel clutch C1 and the reverse-travel brake B1 correspond to a connection/disconnection device and are each a hydraulic type friction engagement device that is put into friction engagement by a hydraulic cylinder.

When the forward-travel clutch C1 is engaged and the reverse-travel brake B1 is released, the forward/reverse travel switch device 16 is rotated as one unit, that is, the turbine shaft 34 is directly linked to the input shaft 36 of the continuously variable transmission 18. Thus, a forward-travel power transmission path is established (achieved), so that the drive force in the forward travel direction is transmitted to the continuously variable transmission 18 side. When the reverse-travel brake B1 is engaged and the forward-travel clutch C1 is released, a reverse-travel power transmission path is established (achieved) in the forward/reverse travel switch device 16, that is, the input shaft 36 of the continuously variable transmission 18 is rotated in a direction opposite to the rational direction of the turbine shaft 34. Thus, the drive force in the reverse travel direction is transmitted to the continuously variable transmission 18. Furthermore, when the forward-travel clutch C1 and the reverse-travel brake B1 are both released, the forward/reverse travel switch device 16 assumes a neutral state (disconnected state) in which power is not transmitted.

The continuously variable transmission 18 includes input variable pulley (primary pulley) 42 which is an input member provided on the input shaft 36 and whose effective diameter is variable, an ouput variable pulley (secondary pulley) 46 which is an output member provided on an output shaft 44, and a drive belt 48 that is wrapped around the two variable pulleys 42, 46. Power is transmitted through the friction between the variable pulleys 42, 46 and the drive belt 48.

Each of the variable pulleys 42 and 46 is constructed of a stationary rotor 42a, 46a, fixed to a corresponding one of the input shaft 36 and the output shaft 44, a movable rotor 42b, 46b, provided so as to be incapable of being relatively rotated around the input shaft 36 or the output shaft 44 and being moved in the direction of the axis of the input or output shaft, and a corresponding one of an input hydraulic cylinder (primary hydraulic cylinder) 42c and an output hydraulic cylinder (secondary hydraulic cylinder) 46c provided for applying thrust for changing the width of a V-shape groove between the stationary and movable rotors. As the amount of supply/discharge flow of working oil with respect to the input hydraulic cylinder 42c is controlled by the hydraulic control circuit 100, the V-shape groove widths of the two variable pulleys 42, 46 change, altering the pulley contact diameters (effective diameters) of the drive belt 48. Thus, the speed change ratio $\gamma$ (=input shaft rotational speed $N_{IN}$/output shaft rotational speed $N_{OUT}$) is continuously changed. Furthermore, through pressure-regulating control of the oil pressure (belt clamping pressure Pd) of the output hydraulic cylinder 46c by the hydraulic control circuit 100, the belt clamping pressure is controlled so that the drive belt 48 does not slip. As a result of these controls, the oil pressure (speed shift control pressure Pin) of the input hydraulic cylinder 42c is produced.

FIG 2 is a block diagram illustrating portions of a control system provided in a vehicle for controlling the vehicular driving device 10 shown in FIG 1, and the like. The electronic control device 50 includes, for example, a so-called microcomputer that has a CPU, a RAM, a ROM, an input/output interface, etc. The CPU performs signal processing in accordance with programs pre-stored in the ROM while utilizing the temporary storage function of the RAM to execute an output control of the engine 12, the shift control of the continuously variable transmission 18, the belt clamping pressure control, a torque capacity control of the lockup clutch 26, etc. The electronic control device 50 may be constructed individually for the engine control, the hydraulic control of the continuously variable transmission 18 and the lockup clutch 26, etc., as needed.

The electronic control device 50 is supplied with a signal representing the crankshaft rotational speed that corresponds to the crankshaft rotation angle (position) $A_{CR}$ (°) detected by an engine rotational speed sensor 52 and to the rotational speed (engine speed) $N_E$ of the engine 12, a signal representing the rotational speed (turbine rotational speed) $N_T$ of the turbine shaft 34 detected by a turbine rotational speed sensor 54, a signal representing the rotational speed (input shaft rotational speed) $N_{IN}$ of the input shaft 36 that is the input rotational speed of the continuously variable transmission 18 detected by an input shaft rotational speed sensor 56, a vehicle speed signal representing the vehicle speed V that corresponds to the rotational speed (output shaft rotational speed) $N_{OUT}$ of the output shaft 44, namely, the output shaft rotational speed $N_{OUT}$, which is the output rotational speed of the continuously variable transmission 18 detected by a vehicle speed sensor (output shaft rotational speed sensor) 58, a throttle valve opening degree signal representing the throttle valve opening degree $\theta_{TH}$ of an electronic throttle valve 30 provided in an intake pipe 32 (see FIG. 1) of the engine 12 which is detected by a throttle sensor 60, a signal representing the cooling water temperature $T_W$ of the engine 12 detected by a cooling water temperature sensor 62, a signal representing the oil temperature $T_{CVT}$ of the hydraulic circuit of the continuously variable transmission 18 or the like which is detected by a CVT oil temperature sensor 64, an accelerator operation amount signal representing the accelerator operation amount Acc, that is, the amount of operation of an accelerator pedal 68, which is detected by an accelerator operation amount sensor 66, a brake operation signal representing the presence/absence of operation $B_{ON}$ of a foot brake, that is, a service brake, which is detected by a foot brake switch 70, an operation position signal representing the lever position (operation position) $P_{SH}$ of a shift lever 74 detected by a lever position sensor 72, etc.

The electronic control device 50 outputs engine control command signals $S_E$ for controlling the output of the engine 12, for example, a throttle signal for driving a throttle actuator 76 for controlling the opening/closing of the electronic throttle valve 30, an ignition signal for controlling the amount of fuel injected from a fuel injection device 78, an ignition timing signal for controlling the timing of the ignition of the engine 12 performed by an ignition device 80, etc. Furthermore, the electronic control device 50 outputs a command signal to a cruise control-purpose computer 82 for executing a so-called cruise control of automatically controlling the vehicle speed V so as to achieve a target vehicle speed V* that is set by a driver. Still further, the electronic control device 50 outputs to the hydraulic control circuit 100 various signals, including: shift control command signals $S_T$ for changing the speed change ratio $\gamma$ of the continuously variable transmission 18, for example, a command signal for driving a solenoid valve DS1 and a solenoid valve DS2 that control the amount of flow of working oil to the input hydraulic cylinder 42c; clamping pressure control command signals $S_B$ for regulates the clamping pressure of the drive belt 48, for example, a command signal for driving a linear solenoid valve SLS that regulates the belt clamping pressure Pd, line oil pressure control command signals $S_{PL}$ for controlling a line oil pressure $P_L$, for example, a command signal for driving a linear solenoid valve SLT that regulates the line oil pressure $P_L$; etc.

The shift lever 74 is disposed, for example, near the driver's seat, and is designed to be manually operated to any one of the five lever positions "P", "R", "N", "D" and "L" (see FIG 3) that are sequentially located.

The "P" position (range) is a parking position for opening the power transmission path in the vehicular driving device 10, that is, for bringing about a neutral state where the power transmission in the vehicular driving device 10 is disconnected, and for mechanically stopping (locking) rotation of the output shaft 44 via a mechanical parking mechanism. The "R" position is a reverse movement position for setting the rotational direction of the output shaft 44 of the vehicular driving device 10 to the reverse rotational direction. The "N" position is a neutral position for bringing about a neutral state where the power transmission in the vehicular driving device 10 does not occur. The "D" position is a forward movement position for causing the execution of an automatic shift control by establishing an automatic shift mode in a shift range in which the shift of the continuously variable transmission 18 is permissible. The "L" position is an engine brake position for causing a strong engine brake effect. Thus, the "P" position and the "N" position are non-movement positions that are selected when the vehicle is not moving. On the other hand, the "R" position, the "D" position and the "L" position are vehicle-movement positions that are selected when the vehicle is moving.

FIG 3 is a hydraulic circuit diagram showing portions of the hydraulic control circuit 100 that are relevant to the belt clamping pressure control of the continuously variable transmission 18, the speed change ratio control, and the engagement oil pressure control of the forward-travel clutch C1 or the reverse-travel brake B1 associated with the operation of the shift lever 74. In FIG. 3, the hydraulic control circuit 100 includes a clamping pressure control valve 110 that regulates the belt clamping pressure Pd, which is the oil pressure of the output hydraulic cylinder 46c, so that the drive belt 48 does not slip, a speed change ratio control valve UP 114 and a speed change ratio control valve DN 116 that control the amount of flow of working oil to the input hydraulic cylinder 42c so that the speed change ratio $\gamma$ is continuously changed, a thrust ratio control valve 118 that sets the ratio between the shift control pressure Pin and the belt clamping pressure Pd to a predetermined relationship, and a manual valve 120 in which the oil passageway is mechanically switched in accordance with the operation on the shift lever 74 so that the forward-travel clutch C1 and the reverse-travel brake B1 are engaged or released.

The line oil pressure $P_L$ is regulated by a relief type primary regulator valve (line oil pressure regulating valve) 122 to a value that is in accordance with the engine load and the like, for example, on the basis of a control oil pressure $P_{SLT}$ that is the output oil pressure of the linear solenoid valve SLT through the use as a basic pressure of the working oil pressure output (generated) from the mechanical oil pump 28 (see FIG 1) that is rotationally driven by the engine 12.

More concretely, the primary regulator valve 122 includes a spool valve element 122a that is provided movably in the direction of an axis so as to open or close an input port 122i so that the working oil pressure generated by the oil pump 28 is received and then discharged via an output port 122t into an intake oii passageway 124, a spring 122b is provided as the impelling means for impelling the spool valve element 122a in the valve closing direction, an oil chamber 122c that contains the spring 122b and that receives the control oil pressure $P_{SLT}$ so as to apply thrust to the spool valve element 122a in the valve closing direction, and an oil chamber 122d that receives the working oil pressure generated by the oil pump 28 so as to apply thrust to the spool valve element 122a in the valve opening direction.

In the primary regulator valve 122 constructed as described above, an equilibrium state is expressed by the following expression (1) :

$$P_L \times b = P_{SLT} \times a + F_S \dots (1)$$

where $F_S$ is the spring force of the spring 122b, and a is the pressure reception area for the control oil pressure $P_{SLT}$ in the oil chamber 122c, and b is the pressure reception area for the line oil pressure $P_L$ in the oil chamber 122d. Hence, the line oil pressure $P_L$ is expressed by the following expression (2), showing that the line oil pressure $P_L$ is proportional to the control oil pressure $P_{SLT}$.

$$P_L = P_{SLT} \times (a/b) + F_S/b \dots (2)$$

The primary regulator valve 122 and the linear solenoid valve SLT function as a pressure regulating device that regulates the pressure of the working oil ejected from the oil pump 28 to the line oil pressure $P_L$ on the basis of the line oil pressure control command signal $S_{PL}$, which is an oil pressure command value.

A modulator oil pressure $P_M$ is used as the basic pressure of the control oil pressure $P_{SLT}$ and for a control oil pressure $P_{SLS}$ that is the output oil pressure of the linear solenoid valve SLS. The modulator oil pressure $P_M$ is used also as the basic pressure of a control oil pressure $P_{DS1}$, which is the output oil pressure of the solenoid valve DS1 that is duty-controlled by the electronic control device 50, and for a control oil pressure $P_{DS2}$, which is the output oil pressure of the solenoid valve DS2. The modulator oil pressure $P_M$ is regulated to a constant pressure by a modulator valve 126 through the use of the line oil pressure $P_L$ as the basic pressure.

The output oil pressure $P_{LM2}$ is regulated through the use of the line oil pressure $P_L$ as the basic pressure by a line pressure modulator NO. 2 valve 128, on the basis of the control oil pressure $P_{SLT}$.

In the manual valve 120, the input port 120a is supplied with the output oil pressure $P_{LM2}$. Then, when the shift lever 74 is operated to the "D" position or the "L" position, the oil passageway of the manual valve 120 is switched so that the output oil pressure $P_{LM2}$ is supplied as a forward movement output pressure to the forward-travel clutch C1 via the forward-travel output port 120f, and the working oil in the reverse-travel brake B1 is drained (discharged) to, for example, the atmospheric pressure, from the reverse-travel output port 120r via a discharge port EX. Therefore, the forward-travel clutch C1 is engaged and the reverse-travel brake B1 is released.

When the shift lever 74 is operated to the "R" position, the oil passage of the manual valve 120 is switched so that the output oil pressure $P_{LM2}$ is supplied as a reverse movement output pressure to the reverse-travel brake B1 via the reverse-travel output port 120r, and the pressure of the working oil in the forward-travel clutch C1 is drained (discharged) to, for example, the atmosphere, from the forward-travel output port 120f via the discharge port EX. Therefore, the reverse-travel brake B1 is engaged and the forward-travel clutch C1 is released.

When the shift lever 74 is operated to the "P" position or the "N" position, the oil passageway of the manual valve 120 is switched so that the oil passageway from the input port 120a to the forward-travel output port 120f and the oil passageway from the input port 120a to the reverse-travel output port 120r are both disconnected and the working oil in both the forward-travel clutch C1 and the reverse-travel brake B1 is drained from the manual valve 120. Therefore, both the forward-travel clutch C1 and the reverse-travel brake B1 are released.

The speed change ratio control valve UP 114 includes a spool valve element 114a that is provided movably in the direction of the axis so as to be positioned at an upshift position where the line oil pressure $P_L$ can be received via an input port 114i and supplied to the input variable pulley 42 via an input/output port 114j and where an input/output port 114k is closed, and at a home position where the input variable pulley 42 is connected in communication with the input/output port 114k via the input/output port 114j, a spring 114b provided as urging means for urging the spool valve element 114a toward the home position side, an oil chamber 114c that contains the spring 114b and that receives the control oil pressure $P_{DS2}$ in order to apply to the spool valve element 114a thrust toward the home position side, and an oil chamber 114d that receives the control oil pressure $P_{DS1}$ in order to apply to the spool valve element 114a thrust toward the upshift position side.

The speed change ratio control valve DN 116 includes a spool valve element 116a that is provided movably in the direction of the axis so as to be positioned at a downshift position where an input/output port 116j is connected in communication to the discharge port EX and at a home position where the input/output port 116j is communicably connected with an input/output port 116k, a spring 116b provided as impelling means for impelling the spool valve element 116a toward the home position side, an oil chamber 116c that contains the spring 116b and that receives the control oil pressure $P_{DS1}$ in order to apply to a spool valve element 116a thrust toward the home position side, and an oil chamber 116d that receives the control oil pressure $P_{DS2}$ in order to apply to the spool valve element 116a thrust toward the downshift position side.

In the speed change ratio control valve UP 114 and the speed change ratio control valve DN 116 constructed as described above, when the spool valve element 114a is held at the home position as shown by the illustration of a half portion on the left of the center line thereof shown in FIG 3, by the spring force of the spring 114b, the input/output port 114j and the input/output port 114k are communicably connected to allow the working oil from the input variable pulley 42 to flow to the input/output port 116j. Furthermore, when the spool valve element 116a is held at the home position in accordance with the spring force of the spring 116b as shown by the illustration of a half portion on the right side of the center line in FIG 3, the input/output port 116j and the input/output port 116k are communicably connected, and a thrust ratio control oil pressure $P\tau$ is allowed to pass from the thrust ratio control valve 118 to the input/output port 114k.

When the control oil pressure $P_{DS1}$ is supplied to the oil chamber 114d, the spool valve element 114a is moved to the upshift position against the spring force of the spring 114b as shown by the illustration of the half on the right side of the center line, by the thrust that is in accordance with the control oil pressure $P_{DS1}$. The line oil pressure $P_L$ is supplied in an amount corresponding to the control oil pressure $P_{DS1}$ from the input port 114i via the input/output port 114j to the input hydraulic cylinder 42c. At the same time, the input/output port 114k is disconnected to stop the working oil from flowing to the speed change ratio control valve DN 116 side. Therefore, the shift control pressure Pin is increased, so that the width of the V groove of the input variable pulley 42 is reduced, which reduces the speed change ratio $\gamma$, that is, the continuously variable transmission 18 is upshifted.

When the control oil pressure $P_{DS2}$ is supplied to the oil chamber 116d, the spool valve element 116a is moved to the downshift position side against the spring force of the spring 116b as shown by the illustration of the half on the left side of the center line, by the thrust that is in accordance with the control oil pressure $P_{DS2}$. Therefore, the working oil in the input-side hydraulic cylinder 42c is discharged in an amount corresponding to the control oil pressure $P_{DS2}$, from the discharge port EX via the input/output port 114j, the input/output port 114k and then the input/output port 116j. Due to this, the shift control pressure Pin is decreased, so that the width of the V-shape groove of the input-side variable pulley 42 increases and the speed change ratio $\gamma$ is inreased, that is, the continuously variable transmission 18 is downshifted.

Thus, the line oil pressure $P_L$ is used as the basic pressure of the shift control pressure Pin. When the control oil pressure $P_{DS1}$ is output, the line oil pressure $P_L$ input to the speed change ratio control valve UP 114 is supplied to the input hydraulic cylinder 42c so that the shift control pressure Pin is increased causing continuous upshift. When the control oil pressure $P_{DS2}$ is output, the working oil of the input hydraulic cylinder 42c is discharged from the discharge port EX, so that the shift control pressure Pin is reduced causing continuous downshift.

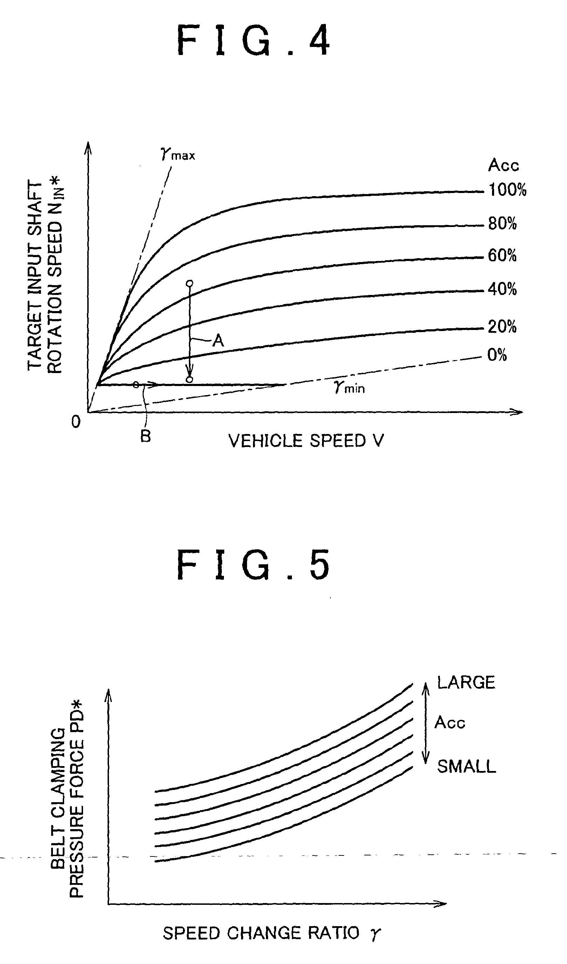

For example, using a pre-stored relationship (shift map) between the vehicle speed V and the target input shaft rotational speed $N_{IN}$*, which is the target input rotational speed of the continuously variable transmission 18, with the accelerator operation amount Acc (e.g., the parameter as shown in FIG 4), a target input shaft rotational speed $N_{IN}$ is set based on a vehicle state represented by the actual vehicle speed V and the actual accelerator operation amount Acc. Then, the continuously variable transmission 18 is shifted through a feedback control in accordance with the rotational speed difference (deviation) $\Delta N_{IN}$ ($N_{IN}$*-$N_{IN}$) between the target input shaft rotational speed $N_{IN}$* and the actual input shaft rotational speed $N_{IN}$ so that the target input shaft rotational speed $N_{IN}$* and the actual input shaft rotational speed $N_{IN}$ become equal. Specifically, the working oil is supplied to or discharged from the input hydraulic cylinder 42c to change the widths of the V-shape groove of the two variable diamter pulleys 42, 46, and thus the speed change ratio $\gamma$ is continuously changed through the feedback control.

The shift map of FIG. 4 corresponds to a shift condition, and is formed to set a target input shaft rotational speed $N_{IN}$* to increase the speed change ratio $\gamma$ the smaller the vehicle speed V is and the larger the accelerator operation amount Acc is. Furthermore, because the vehicle speed V corresponds to the output shaft rotational speed $N_{OUT}$, the target input shaft rotational speed $N_{IN}$*, which is the target value of the input shaft rotational speed $N_{IN}$, corresponds to the target speed change ratio $\gamma$* (=$N_{IN}$*/$N_{OUT}$) that is set within a range between a minimum speed change ratio $\gamma$min and a maximum speed change ratio $\gamma$max.

Furthermore, the control oil pressure $P_{DS1}$ is supplied to the oil chamber 116c of the speed change ratio control valve DN 116 to put the speed change ratio control valve DN 116 into the closed state to restrict the downshift regardless of the control oil pressure $P_{DS2}$. On the other hand, the control oil pressure $P_{DS2}$ is supplied to the oil chamber 114c of the speed change ratio control valve UP 114 to put the speed change ratio control valve UP 114 into the closed state to prohibit the upshift regardless of the control oil pressure $P_{DS1}$. That is, not only when the control oil pressure $P_{DS1}$ and the control oil pressure $P_{DS2}$ are not supplied, but also when the control oil pressure $P_{DS1}$ and the control oil pressure $P_{DS2}$ are both supplied, each of the speed change ratio control valve UP 114 and the speed change ratio control valve DN 116 is held in the closed state where the spool valve element is at the home position. Therefore, even when an on-failure in which one of the solenoid valves DS1, DS2 malfunctions due to a failure in the electric system or the like, and therefore, the control oil pressure $P_{DS1}$ or the control oil pressure $P_{DS2}$ continues to be output at a maximum pressure, it is possible to prevent the occurrence of an abrupt upshift or downshift, and the occurrence of a belt slip caused by an abrupt shift.

The clamping pressure control valve 110 includes a spool valve element 110a that is provided movably in the direction of the axis to open and close an input port 110i so that the line oil pressure $P_L$ is supplied via the input port 110i and an output port 110t to the output-side variable pulley 46 and the thrust ratio control valve 118 and thus a belt clamping pressure Pd is supplied thereto, a spring 110b provided as urging means for urging the spool valve element 110a in a valve opening direction, an oil chamber 110c that contains the spring 110b and that receives the control oil pressure $P_{SLS}$ in order to apply to the spool valve element 110a thrust in the valve opening direction, a feedback oil chamber 110d that receives the belt clamping pressure Pd from the output port 110t in order to apply to the spool valve element 110a thrust in the valve closing direction, and an oil chamber 110e that receives the modulator oil pressure $P_M$ in order to apply to the spool valve element 110a thrust in the valve closing direction.

In the clamping pressure control valve 110 constructed as described above, the belt clamping pressure Pd is output from the output port 110t through a continuous pressure regulating control of the line oil pressure $P_L$ through the use of the control oil pressure $P_{SLS}$ as a pilot pressure so that the drive belt 48 does not slip. Thus, the line oil pressure $P_L$ is used as the basic pressure of the belt clamping pressure Pd.

For example, as shown in FIG. 5, using a pre-stored relationship (belt clamping pressure map) between the speed change ratio $\gamma$ and the belt clamping pressure force Pd* with the transmission torque-corresponding accelerator operation amount Acc being a parameter which has been experimentally found so as not to allow the slipping of the belt, a belt clamping pressure force Pd* is determined (calculated) on the basis of a state of the vehicle indicated by the actual speed change ratio $\gamma$ and the accelerator operation amount Acc. Then, the belt clamping pressure Pd of the output-side hydraulic cylinder 46c is regulated so that the calculated belt clamping pressure force Pd* is obtained. In accordance with this belt clamping pressure Pd, the belt clamping pressure force Pd*, that is, the friction force between the variable pulleys 42, 46 and the drive belt 48, is adjusted.

The thrust ratio control valve 118 includes a spool valve element 118a that is provided movably in the direction of the axis to open and close an input port 118i so that the line oil pressure $P_L$ is supplied via the input port 118i and an output port 118t to the speed change ratio control valve DN 116 and thus the thrust ratio control oil pressure $P\tau$ is supplied thereto, a spring 118b provided as impelling means for impelling the spool valve element 118a in the valve opening direction, an oil chamber 118c that contains the spring 118b and that receives the belt clamping pressure Pd in order to apply to the spool valve element 118a thrust in the valve opening direction, and a feedback oil chamber 118d that receives the thrust ratio control oil pressure $P\tau$ output from the output port 118t in order to apply to the spool valve element 118a thrust in the valve closing direction.

In the thrust ratio control valve 118 constructed as described above, an equilibrium state is expressed by the following expression (3):

$$P\tau \times b = Pd \times a + F_S \ ...(3)$$

where a is the pressure reception area for the belt clamping pressure Pd in the oil chamber 118c, and b is the pressure reception area for the thrust ratio control oil pressure $P\tau$ in the feedback oil chamber 118d, and Fs is the spring force of the spring 118b. Therefore, the thrust ratio control oil pressure $P\tau$ is expressed by the following expression (4), showing that the thrust ratio control oil pressure $P\tau$ is proportional the belt clamping pressure Pd.

$$P\tau = Pd \times (a/b) + F_S/b \ ...(4)$$

When neither the control oil pressure $P_{DS1}$ nor the control oil pressure $P_{DS2}$ is supplied, and when both the control oil pressure $P_{DS1}$ and $P_{DS2}$ are greater than or equal to a respective predetermined pressure, each of the speed change ratio control valve UP 114 and the speed change ratio control valve DN 116 is closed and the spool valve element is held at the home position. In this case, the thrust ratio control oil pressure $P_\tau$ is supplied to the input hydraulic cylinder 42c, so that the shift control pressure Pin is made equal to the thrust ratio control oil pressure $P\tau$. That is, the thrust ratio control valve 118 outputs the thrust ratio control oil pressure $P\tau$, that is, the shift control pressure Pin, which keeps the ratio between the shift control pressure Pin and the belt clamping pressure Pd in a predetermined relationship.

For example, due limitations of the vehicle speed sensor 58, the vehicle speed V is accurately detected when the vehicle speed is very low, that is, when the vehicle speed is below a predetermined vehicle speed. When the vehicle is moving at such a very low vehicle speed or at the time of launching, the feedback-control of the speed change ratio $\gamma$ for resolving the rotational speed difference (deviation) $\Delta N_{IN}$ is replaced with the execution of a so-called closing-in control in which neither the control oil pressure $P_{DS1}$ nor the control oil pressure $P_{DS2}$ is supplied and therefore the speed change ratio control valve UP 114 and the speed change ratio control valve DN 116 are closed. Therefore, when launching the vehicle, a shift control pressure Pin that is proportional to the belt clamping pressure Pd is supplied to the input hydraulic cylinder 42c so that the ratio between the shift control pressure Pin and the belt clamping pressure Pd is caused to be in a predetermined relationship. Thus, the slipping of the drive belt 48 when stopping the vehicle or at very low vehicle speeds is prevented.

At the time, if (a/b) in the first term on the right side in the expression (4) and $F_s/b$ therein are set to allow the realization of a thrust ratio $\tau$ that is greater than the thrust ratio $\tau$ (=output hydraulic cylinder thrust $W_{OUT}$/ input hydraulic cylinder thrust WIN, where $W_{OUT}$ is the belt clamping pressure Pd times the sectional area of the output hydraulic cylinder 46c, and $W_{IN}$ is the shift control pressure Pin times the sectional area of the input hydraulic cylinder 42c) that corresponds to the maximum speed change ratio $\gamma$max, the vehicle is launched smoothly with the maximum speed change ratio $\gamma$max or a speed change ratio $\gamma$max' in the vicinity thereof. Furthermore, the predetermined vehicle speed is a lower limit vehicle speed which is the vehicle speed V at which the rotational speed of a predetermined rotating member, for example, the input shaft rotational speed $N_{IN}$, becomes so small as to be undetectable, and which allows the execution of a predetermined feedback control. For example, the predetermined vehicle speed may be set at about 2 km/h.

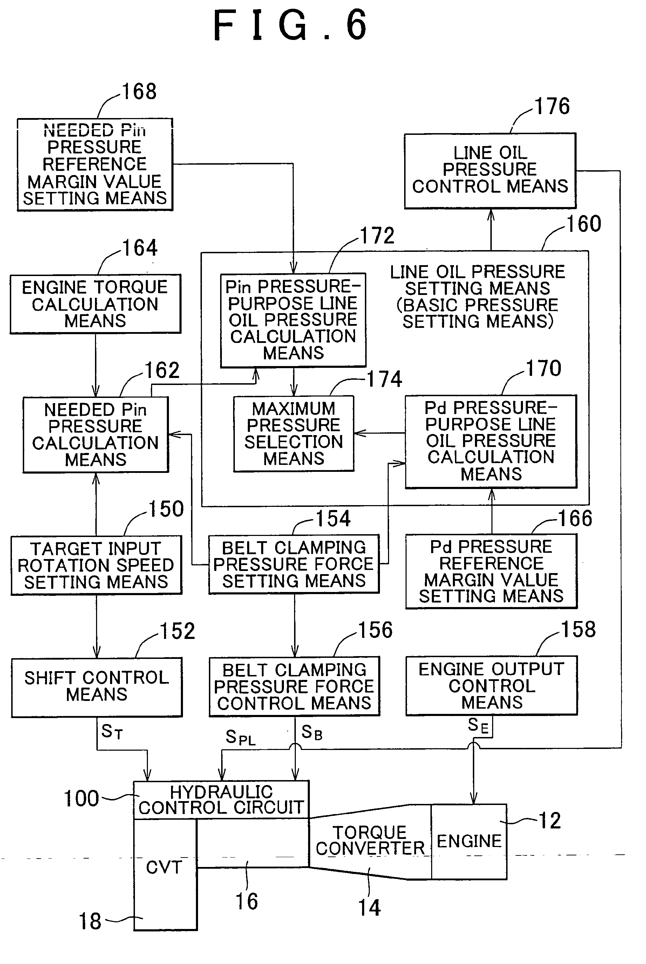

FIG 6 is a functional block diagram illustrating portions of the control function performed by the electronic control device 50. In FIG 6, target input rotation setting means 150 sets a target input shaft rotational speed $N_{IN}$* of the input shaft rotational speed $N_{IN}$ through the use of a pre-stored shift map as shown in FIG 4, on the basis of a state of the vehicle indicated by the actual vehicle speed V and the actual accelerator operation amount Acc.

Shift control means 152 executes a feedback control of the shift of the continuously variable transmission 18 in accordance with the rotational speed difference $\Delta N_{IN}$ (=$N_{IN}$*-$N_{IN}$) so that the actual input shaft rotational speed $N_{IN}$ becomes equal to the target input shaft rotational speed $N_{IN}$* set by the target input rotation setting means 150. Specifically, the shift control means 152 continuously changes the speed change ratio $\gamma$ by outputting to the hydraulic control circuit 100 a shift control command signal (oil pressure command) $S_T$ for changing the widths of the V-shape groove of the two variable pulleys 42, 46 by controlling the amount of flow of the working oil with respect to the input hydraulic cylinder 42c.

The belt clamping pressure force setting means 154 sets a belt clamping pressure force Pd*, for example, from an experimentally determined and pre-stored belt clamping pressure force map as shown in FIG 5, based on the actual speed change ratio $\gamma$ (=input shaft rotational speed $N_{IN}$/output shaft rotational speed $N_{OUT}$) calculated by the electronic control device 50 and the accelerator operation amount Acc. That is, the belt clamping pressure force setting means 154 sets the belt clamping pressure Pd of the output hydraulic cylinder 46c for providing the belt clamping pressure force Pd*.

Belt clamping pressure control means 156 increases or decreases the belt clamping pressure force Pd* by outputting to the hydraulic control circuit 100 a clamping pressure control command signal $S_B$ for regulating the belt clamping pressure Pd of the output hydraulic cylinder 46c to achieve the belt clamping pressure force Pd* set by the belt clamping pressure force setting means 154.

The hydraulic control circuit 100 controls the amount of the working oil supplied to or discharged from the input hydraulic cylinder 42c by actuating the solenoid valve DS1 and the solenoid valve DS2 so that the continuously variable transmission 18 shifts in accordance with the shift control command signal $S_T$, and also regulates the belt clamping pressure Pd by actuating the linear solenoid valve SLS so that the belt clamping pressure force Pd* is increased or decreased in accordance with the clamping pressure control command signal $S_B$.

Engine output control means 158 outputs engine output control command signals $S_E$ to control the output of the engine 12. In particular, for example, the engine output control means 158 may output the throttle signal, the injection signal, the ignition timing signal, etc., to the throttle actuator 76, the fuel injection device 78, the ignition device 80, respectively. For example, the engine output control means 158 controls the engine torque $T_E$ by outputting to the throttle actuator 76 the throttle signal for opening or closing the electronic throttle valve 30 to achieve a throttle valve opening degree $\theta_{TH}$ corresponding to the accelerator operation amount Acc.

In addition, there is a need to set the line oil pressure $P_L$, which is the basic pressure of a shift control pressure Pin needed when the speed change ratio $\gamma$ is feedback-controlled in order to provide good shifting performance, for example, good shift responsiveness (hereinafter, referred to as "needed Pin pressure"), and for the belt clamping pressure Pd for generating the belt clamping pressure force Pd* (hereinafter, referred to as "Pd pressure"), so that the needed Pin pressure and the Pd pressure will be secured.

That is, if the line oil pressure $P_L$ is relatively higher than the needed Pin pressure and the Pd pressure, the shift responsiveness is good and belt slip is unlikely to occur. However, if the line oil pressure $P_L$ is higher than necessary, the fuel economy may deteriorate. Furthermore, if the line oil pressure $P_L$ is lower than the needed Pin pressure, the shift responsiveness may decline. If the line oil pressure $P_L$ is lower than the Pd pressure, belt slip may become likely to occur.

Therefore, line oil pressure setting means 160 as basic pressure setting means sets the line oil pressure $P_L$ controlled by the linear solenoid valve SLT independently of the control of the amount of flow of the working oil with respect to the input hydraulic cylinder 42c performed by the solenoid valve DS1 and the solenoid valve DS2 and the control of the Pd pressure by the linear solenoid valve SLS, based on the higher of the needed Pin pressure or the Pd pressure.

For example, the line oil pressure setting means 160 sets the line oil pressure $P_L$ based on the higher of the oil pressure values obtained by adding to each of the needed Pin pressure or the Pd pressure a predetermined margin value factoring in the control accuracy regarding the line oil pressure $P_L$ and the state of the vehicle.

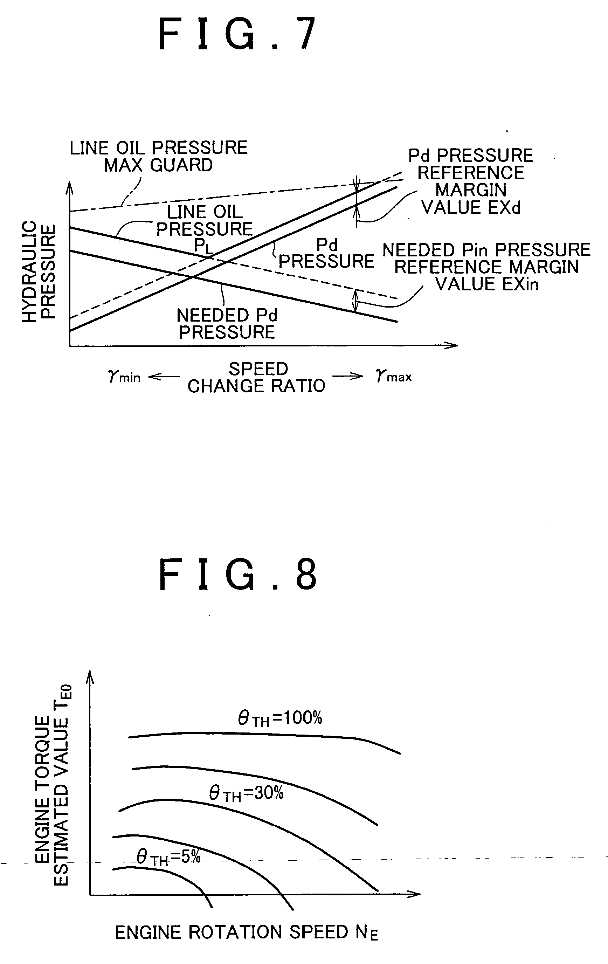

FIG. 7 is a diagram illustrating an example of how the line oil pressure $P_L$ may be set. As shown in FIG 7, the reference margin values EX, predetermined experimentally, are a needed Pin pressure reference margin value EXin for the needed Pin pressure and a Pd pressure reference margin value EXd for the Pd pressure. Thus, as for the reference margin value Ex, the value set for the needed Pin pressure and the value set for the Pd pressure are different from each other. Then, the higher one of the oil pressure value obtained by adding the needed Pin pressure reference margin value EXin to the needed Pin pressure and the oil pressure obtained by adding the Pd pressure reference margin value EXd to the Pd pressure is set as a line oil pressure $P_L$ that is needed. The line oil pressure control command signal $S_{PL}$ for providing the needed line oil pressure $P_L$ is output.

Concretely, needed Pin pressure calculation means 162, which is the primary oil pressure estimation means, calculates a needed Pin pressure from an experimentally determined and pre-stored relationship (calculation expression: needed Pin pressure=f($\gamma$, d($\gamma$*)/dt, $T_{IN}$, Pd pressure)) for estimating the needed Pin pressure by using as variables the speed change ratio $\gamma$, the rate of change d($\gamma$*)/dt of the target speed change ratio $\gamma$*, the input torque $T_{IN}$, the Pd pressure, etc., on the basis of the actual speed change ratio $\gamma$, the rate of change d($\gamma$*)/dt of the target speed change ratio $\gamma$* (=$N_{IN}$*/$N_{OUT}$) calculated by the electronic control device 50 on the basis of the target input shaft rotational speed $N_{IN}$* set by the target input rotation setting means 150, the engine torque estimated value $T_{E0}$ that corresponds to the input torque TIN, the Pd pressure for providing the belt clamping pressure force Pd* set by the belt clamping pressure force setting means 154, etc. The Pd pressure may be a pressure detected by an oil pressure sensor that is provided for detecting the Pd pressure.

Engine torque calculation means 164 calculates an engine torque estimated value $T_{E0}$ estimated, for example, from an experimentally determined and pre-stored relationship (engine torque map) between the engine rotational speed $N_E$ and the engine torque estimated value $T_{E0}$ with the throttle valve opening degree $\theta_{TH}$ being a parameter as shown in FIG. 8, on the basis of the actual engine rotaitonal speed $N_E$ and the actual throttle valve opening degree $\theta_{TH}$.

The setting of the reference margin value EX will be described in detail below.

The Pd pressure is directly regulated and controlled by actuating the linear solenoid valve SLS in accordance with the clamping pressure control command signal $S_B$ output by the belt clamping pressure control means 156, to reach the Pd pressure for providing the belt clamping pressure force Pd*. Therefore, Pd pressure reference margin value setting means 166 sets an experimentally determined and pre-stored Pd pressure reference margin value EXd, taking into account only the dispersion between the line oil pressure control command signal $S_{PL}$ and the actual line oil pressure $P_L$, that is, in such a fashion that the actual line oil pressure $P_L$ will exceed the Pd pressure even if the actual line oil pressure $P_L$ disperses from the line oil pressure control command signal $S_{PL}$.

On the other hand, the needed Pin pressure is an oil pressure that is generated as a result of the working oil flow amount control and the belt clamping pressure control at the time of the feedback control for achieving the target input shaft rotational speed $N_{IN}$* (target speed change ratio $\gamma$*), and is not directly regulated, but is an oil pressure calculated as an estimated value by the needed Pin pressure calculation means 162 as described above. Furthermore, it is necessary to increase the oil pressure for reliably providing an input hydraulic cylinder thrust WIN that is needed for changing the speed change ratio $\gamma$ in addition to maintaining a constant speed change ratio $\gamma$ since the shift is executed through the feedback control. Hence, needed Pin pressure reference margin value setting means 168 sets an experimentally determined and pre-stored needed Pin pressure reference margin value EXin so that the needed Pin pressure reference margin value EXin is greater than the Pd pressure reference margin value EXd set factoring in only the dispersion between the line oil pressure control command signal $S_{PL}$ and the actual line oil pressure PL. Thus, for the needed Pin pressure and the Pd pressure, different reference margin values EX are set.

Furthermore, the Pd pressure reference margin value setting means 166 and the needed Pin pressure reference margin value setting means 168 alter the Pd pressure reference margin value EXd and the needed Pin pressure reference margin value EXin, respectively, on the basis of the state of the vehicle (state of running).

For example, the Pd pressure reference margin value setting means 166 and the needed Pin pressure reference margin value setting means 168 increase the Pd pressure reference margin value EXd and the needed Pin pressure reference margin value EXin when the control accuracy of the actual line oil pressure $P_L$ with respect to the line oil pressure control command signal $S_{PL}$ declines in comparison to when the control accuracy thereof is high. For example, at the time of a low oil temperature state in which the working oil temperature is low so that the viscosity of_the working oil becomes high, the Pd pressure reference margin value setting means 166 and the needed Pin pressure reference margin value setting means 168 set the Pd pressure reference margin value EXd and the needed Pin pressure reference margin value EXin larger than at the time of an ordinary oil temperature state in which the working oil temperature is ordinary temperature, since at the time of low oil temperature, the control accuracy of the actual line oil pressure $P_L$ with respect to the line oil pressure control command signal $S_{PL}$ declines so that the disparity of the actual line oil pressure $P_L$ from the line oil pressure control command signal $S_{PL}$ becomes large. More concretely, the Pd pressure reference margin value EXd and the needed Pin pressure reference margin value EXin are set so as to become the larger the lower the oil pressure becomes. Or, at the time of a predetermined low temperature, the Pd pressure reference margin value EXd and the needed Pin pressure reference margin value EXin are set so as to become larger by an experimentally determined and pre-stored predetermined value than at the time of ordinary oil temperature. As for the ordinary oil temperature, for example, an oil temperature following the completion of warm-up of the engine is conceived.

Furthermore, the Pd pressure reference margin value setting means 166 and the needed Pin pressure reference margin value setting means 168 set the Pd pressure reference margin value EXd and the needed Pin pressure reference margin value EXin smaller at the time of normal steady running during which a constant speed change ratio γ is maintained than at the time of a shift during which the speed change ratio γ is changed since the fluctuation of the speed change ratio γ is very small so that the amount of margin for changing the speed change ratio γ is allowed to be small at the time of normal steady running in comparison with the time of shifting. For example, the Pd pressure reference margin value EXd and the needed Pin pressure reference margin value EXin are each set so as to be smaller by an experimentally found and pre-stored predetermined value at the time of normal steady running than at the time of ordinary shift. The ordinary shift is a shift during which the speed change ratio γ is changed within a range of the rate of change of the speed change ratio γ not exceeding a predetermined value.

Furthermore, at the time of running during which an abrupt shift is needed, that is, at the time of an abrupt shift during which the speed change ratio γ is changed at a rate of change of the speed change ratio γ that exceeds a predetermined value, the Pd pressure reference margin value setting means 166 and the needed Pin pressure reference margin value setting means 168 set the Pd pressure reference margin value EXd and the needed Pin pressure reference margin value EXin larger than at the time of an ordinary shift or at the time of normal steady running since at the time of an abrupt shift, a large amount of margin is needed in order to greatly change the speed change ratio γ. For example, the Pd pressure reference margin value EXd and the needed Pin pressure reference margin value EXin are each set so as to be larger by an experimentally found and pre-stored predetermined amount at the time of an abrupt shift than at the time of an ordinary shift. Instances conceivable as the time of running during which an abrupt shift is needed include the time of running during which an accelerator pedal 68 is sharply returned so that a power-off upshift of sharp speed increase in transmission is executed as indicated by an arrowed line A in FIG. 4 as well as the time of running during which the speed change ratio γ is changed along a lower limit value of the target input shaft rotational speed $N_{IN}$* as indicated by an arrowed line B thus causing a sharp speed increase in transmission, etc.

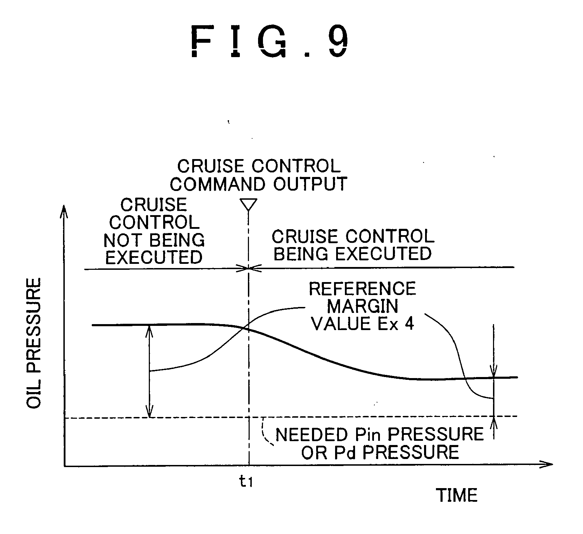

Furthermore, at the time of running during which the belt transmission torque does not sharply change, that is, at the time of running during which sharp acceleration or deceleration is not requested, or, from another point of view, at the time of running during which the degree of request for acceleration or deceleration made by the driver's operation is low, the Pd pressure reference margin value setting means 166 and the needed Pin pressure reference margin value setting means 168 set the Pd pressure reference margin value EXd and the needed Pin pressure reference margin value EXin smaller than at the time of an ordinary shift or at the time of normal steady running, since at the time of running during which the belt transmission torque does not sharply change, the amount of margin provided for acceleration or deceleration is allowed to be small. For example, at the time of running during which sharp acceleration or deceleration is not requested, the Pd pressure reference margin value EXd and the needed Pin pressure reference margin value EXin are each reduced by an experimentally found and pre-stored predetermined value with respect to the the values during normal steady running. Instances conceivable as the time of running during which sharp acceleration or deceleration is not requested include the time of running during which the change in the belt transmission torque is smaller than a predetermined value, for example, during constant-speed running during which the cruise control by the cruise control computer 82 is being executed, and the like. As shown in FIG. 9, if a command signal is output to the cruise control computer 82 at a time point $t_1$, the reference margin value EX is set smaller by a predetermined value at the time of constant-speed running following the time point $t_1$ during which the cruise control is being executed than at the time of normal steady running during which the cruise control is not being executed.

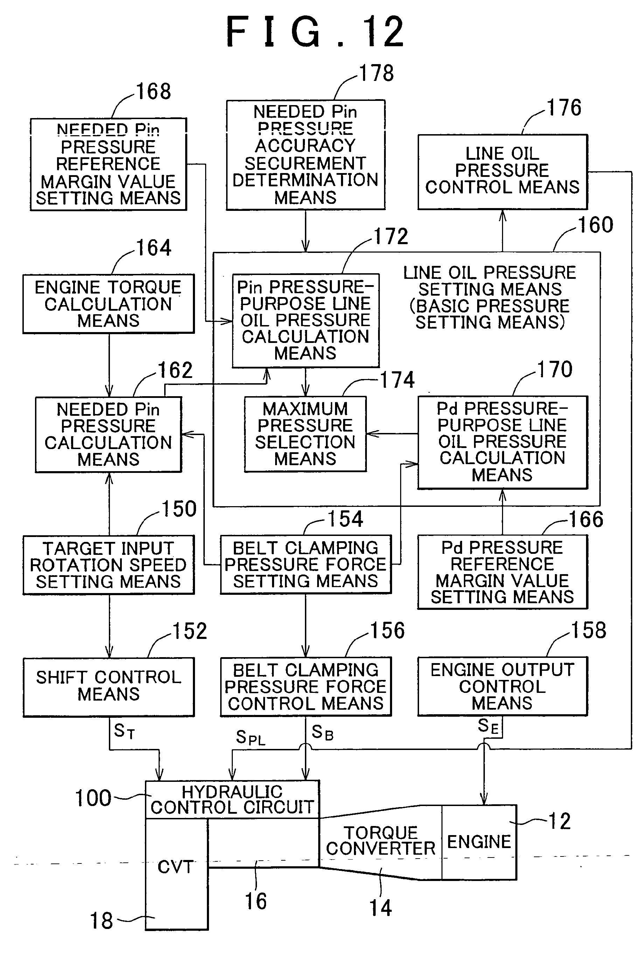

As shown in FIG 12, the line oil pressure setting means 160 includes Pd pressure-purpose line oil pressure calculation means 170 for calculating a Pd pressure-purpose line oil pressure $P_L$d on the basis of the Pd pressure, Pin pressure-purpose line oil pressure calculation means 172 for calculating a Pin pressure-purpose line oil pressure $P_L$in on the basis of the needed Pin pressure, and maximum pressure selection means 174 for selecting the higher of either the line oil pressure of the Pd pressure-purpose line oil pressure $P_L$d or the Pin pressure-purpose line oil pressure $P_L$in. The line oil pressure setting means 160 sets the line oil pressure selected by the maximum pressure selection means 174, as the needed line oil pressure $P_L$.

For example, the Pd pressure-purpose line oil pressure calculation means 170 calculates, as a Pd pressure-purpose line oil pressure $P_L$d, an oil pressure value obtained by adding the Pd pressure reference margin value EXd set by the Pd pressure reference margin value setting means 166 to the belt clamping pressure force Pd* set by the belt clamping pressure force setting means 154, specifically, the Pd pressure for providing the belt clamping pressure force Pd*.

Furthermore, the in pressure purpose line oil pressure calculation means 172 calculates, as a Pin pressure-purpose line oil pressure $P_L$in, an oil pressure value obtained by adding the needed Pin pressure reference margin value EXin set by the needed Pin pressure reference margin value setting means 168 to the needed Pin pressure calculated by the needed Pin pressure calculation means 162.

The line oil pressure setting means 160 sets, as a needed line oil pressure $P_L$, the higher line oil pressure of the Pd pressure-purpose line oil pressure $P_L$d and the Pin pressure-purpose line oil pressure $P_L$in which has been selected by the maximum pressure selection means 174. Incidentally, as shown in FIG 7, the needed line oil pressure $P_L$ is set while an experimentally found and determined line oil pressure MAX guard for avoiding the excess of the line oil pressure $P_L$ over the permissible load of the drive belt 48 is used as an upper limit. This line oil pressure MAX guard may be determined, taking into account the fuel economy in place of or in addition to the permissible load of the drive belt 48.

Line oil pressure control means 176 regulates the line oil pressure $P_L$ by outputting to the hydraulic control circuit 100 the line oil pressure control command signal $S_{PL}$ for providing the needed line oil pressure $P_L$ set by the line oil pressure setting means 160.

The hydraulic control circuit 100 actuates the linear solenoid valve SLT so that the line oil pressure $P_L$ is regulated in accordance with the line oil pressure control command signal $S_{PL}$.

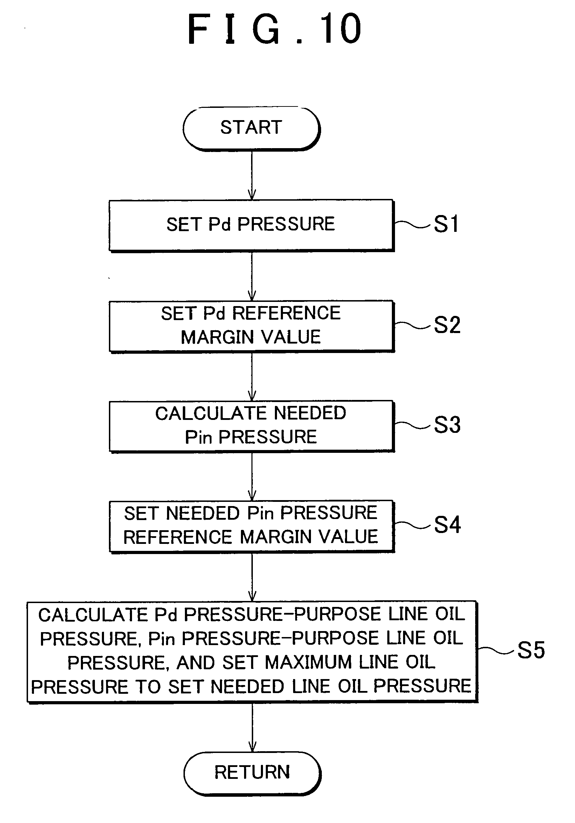

FIG 10 is a flowchart illustrating a portion of the control operation of the electronic control device 50, that is, a control operation for appropriately setting the line oil pressure $P_L$ on the basis of the needed Pin pressure and the Pd pressure, and is executed periodically at intervals of, for example, about several msec to several tens of msec.

Firstly, in step (hereinafter, "step" will be omitted) S1, corresponding to the belt clamping pressure force setting means 154, a belt clamping pressure force Pd*, specifically, a Pd pressure for providing the belt clamping pressure force Pd*, is set, for example, from a belt clamping pressure force map as shown in FIG. 5, on the basis of the actual speed change ratio γ and the actual accelerator operation amount Acc.

Next, in S2, corresponding to the Pd pressure reference margin value setting means 166, an experimentally determined and pre-stored Pd pressure reference margin value EXd is set. Incidentally, the Pd pressure reference margin value EXd is altered on the basis of the state of the vehicle (state of running).

Next, in S3, corresponding to the needed Pin pressure calculation means 162, a needed Pin pressure is calculated from an experimentally found and pre-stored relationship (needed Pin pressure = f (γ, d(γ*)/dt, $T_{IN}$, Pd pressure)) for estimating the needed Pin pressure, on the basis of the actual speed change ratio γ, the rate of change d(γ*)/dt of the target speed change ratio γ* calculated on the basis of the target input shaft rotational speed $N_{IN}$* ; the estimated engine torque $T_{E0}$ corresponding to the input torque TIN; the Pd pressure, set in S 1, etc.

Next, in S4, corresponding to the needed Pin pressure reference margin value setting means 168, an experimentally determined and pre-stored needed Pin pressure reference margin value EXin is set so as to be larger than the Pd pressure reference margin value EXd. In addition, the needed Pin pressure reference margin value EXin is altered on the basis of the state of the vehicle (state of running), similarly to the Pd pressure reference margin value EXd.

Next, in S5, corresponding to the line oil pressure setting means 160 (the Pd pressure-purpose line oil pressure calculation means 170, the Pin pressure-purpose line oil pressure calculation means 172, the maximum pressure selection means 174), an oil pressure value obtained by adding the Pd pressure reference margin value EXd set in S2 to the Pd pressure set in S1 is calculated as a Pd pressure-purpose line oil pressure $P_L$d, and an oil pressure value obtained by adding the needed Pin pressure reference margin value EXin set in S4 to the needed Pin pressure calculated in S3 is calculated as a Pin pressure-purpose line oil pressure $P_L$in, and the higher line oil pressure of the Pd pressure-purpose line oil pressure $P_L$d and the Pin pressure-purpose line oil pressure $P_L$in is selected, and the selected higher line oil pressure is set as a needed line oil pressure $P_L$.

As described above, according to the embodiment, the line oil pressure $P_L$ that is the basic pressure of the needed Pin pressure and the Pd pressure is set on the basis of the higher oil pressure of the needed Pin pressure and the Pd pressure by the line oil pressure setting means 160. Therefore, for the needed Pin pressure needed for shifting and the Pd pressure needed for the belt clamping pressure, a required minimum line oil pressure $P_L$ is appropriately set so as to secure good shifting performance and good belt clamping pressure.

Furthermore, according to this embodiment, since the line oil pressure $P_L$ is set by the iine oii pressure setting means 160 on the basis of the higher one of the oil pressure values obtained by adding the reference margin values EX to the needed Pin pressure and to the Pd pressure, an appropriate line oil pressure $P_L$ factoring in the control accuracy of the actual line oil pressure $P_L$ and the state of the vehicle can be set.

Furthermore, according to this embodiment, since different reference margin values EX are set for the needed Pin pressure and the Pd pressure, reference margin values EX factoring in the different manners of control of the needed Pin pressure and the Pd pressure are set, so that appropriate line oil pressure $P_L$ is set. For example, in the case of the Pd pressure that is directly regulated and controlled by actuating the linear solenoid valve SLS so as to achieve a Pd pressure for providing the belt clamping pressure force Pd*, what needs to be factored in is only the dispersion in the actual line oil pressure $P_L$ with respect to the line oil pressure control command signal $S_{PL}$, and therefore a relatively small Pd pressure reference margin value EXd is set. In the case of the needed Pin pressure provided as a result of the flow amount control of the working oil and the belt clamping pressure control in the feedback control performed so as to achieve a target speed change ratio $\gamma^*$, the needed Pin pressure is not directly regulated and controlled, but is calculated as an estimated value, and furthermore, it is necessary to factor in the error of the estimated value and to add an oil pressure that allows the securement of the input hydraulic cylinder thrust $W_{IN}$ needed in order to maintain or change the speed change ratio $\gamma$. Thus, a needed Pin pressure reference margin value EXin that is larger than the Pd pressure reference margin value EXd is set.

Furthermore, according to this embodiment, larger Pd pressure reference margin values EXd and larger needed Pin pressure reference margin values EXin are set when the control accuracy of the actual line oil pressure $P_L$ with respect to the line oil pressure control command signal $S_{PL}$ is low than when the control accuracy thereof is high. Therefore, appropriate line oil pressure $P_L$ is set even when the control accuracy of the actual line oil pressure $P_L$ with reference to the line oil pressure control command signal $S_{PL}$ is low. For example, when the oil temperature is low and therefore the viscosity of the working oil is relatively high, the control accuracy of the actual line oil pressure $P_L$ with reference to the line oil pressure control command signal $S_{PL}$ is lower than at the time of ordinary oil temperature, and therefore larger reference margin values EX are set than at the time of ordinary oil temperature. Thus, appropriate line oil pressure $P_L$ is set even when the control accuracy of the actual line oil pressure $P_L$ with reference to the line oil pressure control command signal $S_{PL}$, such as when the oil temperature is low.

Furthermore, according to this embodiment, at the time of running during which an abrupt shift is needed, larger reference margin values EX are set than at the time of an ordinary shift and at the time of normal steady running. Thus, even at the time of an abrupt shift, appropriate line oil pressure $P_L$ is set.

Furthermore, according to the embodiment, at the time of running during which the belt transmission torque does not sharply change, smaller reference margin values EX are set than at the time of normal steady running. Thus, at the time of running during which abrupt acceleration or deceleration is not needed and therefore the reference margin values EX can be made small, for example, at the time of constant-speed running during which the cruise control is being executed, the line oil pressure $P_L$ is set smaller than at the time of normal steady running. Thereby further improving fuel economy.

Next, a second embodiment of the invention will be described. In the following description, portions common among embodiments of the invention are affixed with the same reference characters, and the description thereof will not be repeated.

In the first embodiment, the needed Pin pressure is estimated by the needed Pin pressure calculation means 162. If in the case of the first embodiment, the needed Pin pressure by the needed Pin pressure calculation means 162 cannot be accurately estimated, the line oil pressure $P_L$ is set on the basis of the low-accuracy needed Pin pressure by the line oil pressure setting means 160, thus leading to a possibility of deteriorating the shifting performance, for example, the shift responsiveness. Therefore, when the needed Pin pressure by the needed Pin pressure calculation means 162 cannot be accurately estimated, the line oil pressure $P_L$ is set on the basis of the Pd pressure aione in the second embodiment, instead of being set on the basis of the needed Pin pressure and the Pd pressure.

That is, when the needed Pin pressure by the needed Pin pressure calculation means 162 can be accurately estimated, the line oil pressure setting means 160 sets the line oil pressure $P_L$ on the basis of the higher one of the oil pressure values obtained by adding reference margin values EX to the needed Pin pressure and to the Pd pressure. On the other hand, when the needed Pin pressure by the needed Pin pressure calculation means 162 cannot be accurately estimated, the line oil pressure $P_L$ is set on the basis of only the Pd pressure without using the needed Pin pressure nor the reference margin value EX.

Instances conceivable as the case where good accuracy in the estimation of the needed Pin pressure by the needed Pin pressure calculation means 162 is not secured include cases where the needed Pin pressure cannot be estimated due to failure or the like of any of various portions used for the estimation, such as the time of failure of the input shaft rotational speed sensor 56 for detecting the input shaft rotational speed $N_{IN}$ for use for the calculation of the actual speed change ratio $\gamma$ (or a target speed change ratio $\gamma^*$) in the process of estimating the needed Pin pressure, the time of failure of the output shaft rotational speed sensor 58 for detecting the output shaft rotational speed $N_{OUT}$, the time of impossibility of the calculation of an input torque $T_{IN}$ (engine torque estimated value $T_{E0}$) due to failure of the throttle sensor 60 for detecting the throttle valve opening degree $\theta_{TH}$, the time of failure of an oil pressure sensor for detecting the Pd pressure if a sensor detected pressure is used as the Pd pressure, etc. The aforementioned conceivable instances also include cases where the estimation accuracy regarding the needed Pin pressure is low, such as the case where the calculation accuracy of the rate of change $d(\gamma^*)/dt$ of the target speed change ratio $\gamma^*$ is low, for example, during transition in an abrupt shift, including a power-on downshift and a power-off upshift, during which the Pd pressure reference margin value EXd and the needed Pin pressure reference margin value EXin are set larger than at the time of an ordinary shift and the time of normal steady running (e.g., during a sharp returning operation or a sharp depressing operation of the accelerator pedal 68, or immediately after such a sharp pedal returning operation, or immediately after such a sharp depressing operation), the case where there is possibility of the target speed change ratio $\gamma^*$ being greatly changed and resulting in an abrupt shift as in a well-known manual shift in which the speed change ratio $\gamma$ is altered by operating the shift lever, etc.

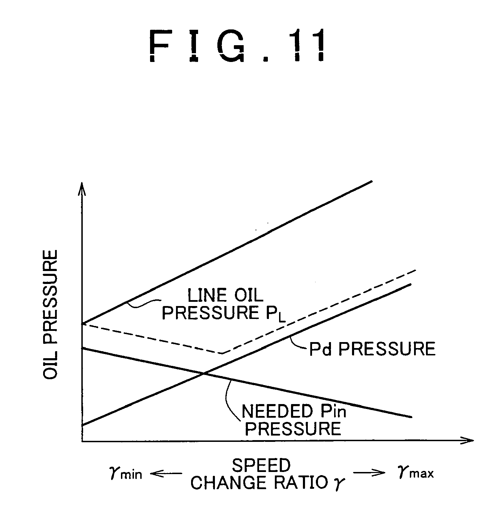

FIG 11 is a diagram illustrating an example of the concept of setting the line oil pressure $P_L$ in the case where good accuracy in the estimation of the needed Pin pressure by the needed Pin pressure calculation means 162 is not secured. As shown in FIG 11, the line oil pressure $P_L$ is set as indicated by a solid line, specifically, from the following expression (5) set on the basis of the Pd pressure, instead of setting as the line oil pressure $P_L$ the higher line oil pressure of the Pin pressure-purpose line oil pressure $P_L$in obtained by adding the needed Pin pressure reference margin value EXin to the needed Pin pressure and the Pd pressure-purpose line oil pressure $P_L$d obtained by adding the Pd pressure reference margin value EXd to the Pd pressure, as indicated by a dashed line.

$$P_L = \alpha \times \text{Pd pressure} + \beta \quad ...(5)$$

where $\alpha$ and $\beta$ are experimentally found and pre-stored constants that, obviously, make the line oil pressure $P_L$ higher than the Pd pressure-purpose line oil pressure $P_L$d and that also reliably make the line oil pressure $P_L$ higher than any one of the Pin pressure-purpose line oil pressures $P_L$in conceivable in different states of the vehicle.

More concretely, FIG 12 is a functional block diagram illustrating portions of the control functions performed by the electronic control device 50, and corresponds to FIG 6. In FIG 12, the arrangement is different from that shown in FIG. 6 mainly in that needed Pin pressure accuracy securement determination means 178 is further provided for determining whether or not good accuracy in the estimation of the needed Pin pressure by the needed Pin pressure calculation means 162 is secured, and that the setting of the line oil pressure $P_L$ by the line oil pressure setting means 160 is executed on the basis of a result of the determination by the needed Pin pressure accuracy securement determination means 178, etc.

The needed Pin pressure accuracy securement determination means 178 determines whether or not good accuracy in the estimation of the needed Pin pressure by the needed Pin pressure calculation means 162 is secured, for example, on the basis of whether or not a needed Pin pressure can be estimated by the needed Pin pressure calculation means 162. Concretely, the needed Pin pressure accuracy securement determination means 178 determines, for example, whether or not the input shaft rotational speed sensor 56 has a failure, whether or not the output shaft rotational speed sensor 58 has a failure, whether or not the throttle sensor 60 has a failure, or whether or not an oil pressure sensor for detecting the Pd pressure has a failure in the case where a sensor-detected pressure is used as the Pd pressure, on the basis of various signals input from theses sensors, and then, on the basis of a result of the determination, determines whether or not the needed Pin pressure can be estimated.

Furthermore, the needed Pin pressure accuracy securement determination means 178 determines whether the needed Pin pressure by the needed Pin pressure calculation means 162can be accurately estimated, for example, on the basis of whether or not the estimation accuracy of theneeded Pin pressure declines. Concretely, the needed Pin pressure accuracy securement determination means 178 determines whether the estimation accuracy of the needed Pin pressure declines, for example, on the basis of whether or not the present state is in transition in an abrupt shift, such as a power-on downshift, a power-off upshift, etc., or whether or not a manual shift is being performed.

The line oil pressure setting means 160 sets as a needed line oil pressure $P_L$ the higher line oil pressure of the Pd pressure-purpose line oil pressure $P_L$d or the Pin pressure-purpose line oil pressure $P_L$in selected by the maximum pressure selection means 174, when the needed Pin pressure accuracy securement determination means 178 has determined that the needed Pin pressure by the needed Pin pressure calculation means 162 can be accurately estimated. On the other hand, when the needed Pin pressure accuracy securement determination means 178 has determined that the needed Pin pressure by the needed Pin pressure calculation means 162 cannot be accurately estimated, the line oil pressure setting means 160 sets a line oil pressure $P_L$ from the expression (5) on the basis of the belt clamping pressure force Pd* set by the belt clamping pressure force setting means 154, specifically, the Pd pressure for providing the belt clamping pressure force Pd*.

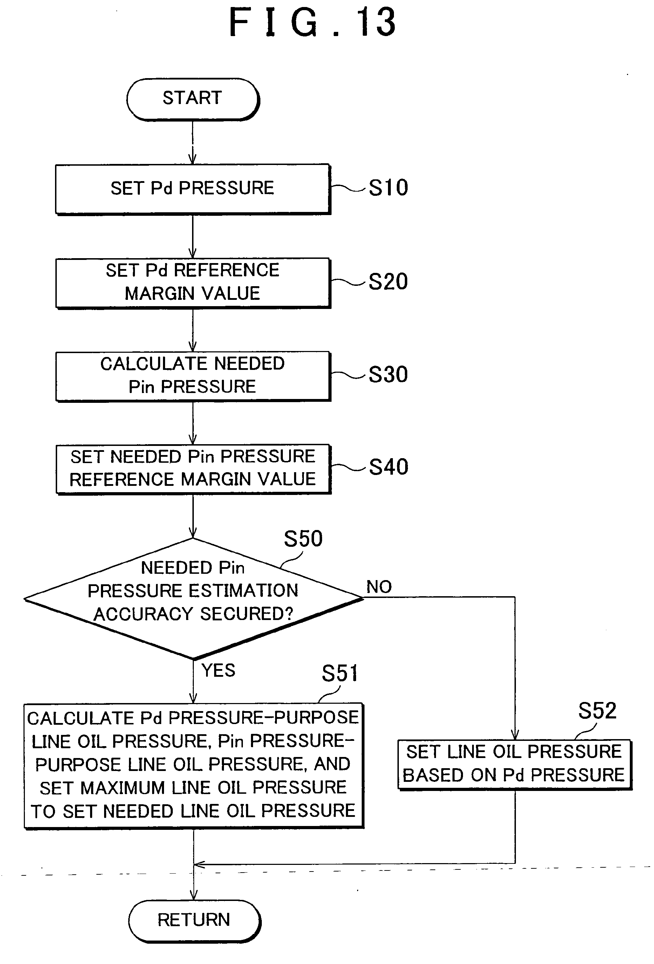

FIG 13 is a flowchart illustrating portions of the control operations of the electronic control device 50, that is, a control operation for appropriately setting the line oil pressure $P_L$. The control operation illustrated by the flowchart is executed periodically at intervals of, for example, about several msec to several tens of msec.

Firstly, in S10, corresponding to the belt clamping pressure force setting means 154, a belt clamping pressure force Pd*, specifically, a Pd pressure for providing the belt clamping pressure force Pd*, is set, for example, from a belt clamping pressure force map as shown in FIG 5 on the basis of the actual speed change ratio $\gamma$ and the actual accelerator operation amount Acc.

Next, in S20, corresponding to the Pd pressure reference margin value setting means 166, an experimentally determined and pre-stored Pd pressure reference margin value EXd is set. In addition, the Pd pressure reference margin value EXd is altered on the basis of the state of the vehicle (state of running).

Next, in S30, corresponding to the needed Pin pressure calculation means 162, a needed Pin pressure is calculated from an experimentally found and pre-stored relationship (needed Pin pressure=$f(\gamma$, $d(\gamma^*)/dt$, TIN, Pd pressure)) for estimating the needed Pin pressure, on the basis of the actual speed change ratio $\gamma$, the rate of change $d(\gamma^*)/dt$ of the target speed change ratio $\gamma^*$ calculated on the basis of the target input shaft rotational speed $N_{IN}^*$; the estimated engine torque $T_{E0}$ corresponding to the input torque TIN; the Pd pressure, set in S1, etc.

Next, in S40, corresponding to the needed Pin pressure reference margin value setting means 168, an experimentally determined and pre-stored needed Pin pressure reference margin value EXin is set so as to be larger than the Pd pressure reference margin value EXd. Incidentally, the needed Pin pressure reference margin value EXin is adjusted on the basis of the state of the vehicle (state of running), similarly to the Pd pressure reference margin value EXd.

Next, in S50, corresponding to the needed Pin pressure accuracy securement determination means 178, it is determined whether the needed Pin pressure in S30 can be accurately estimated, based on, for example, whether the needed Pin pressure can be estimated in S30, or whether or not the estimation accuracy of the needed Pin pressure declines.

If it is determined that the needed Pin pressure can be accurately estimated and thus an affirmative determination is made in S50, the process proceeds to S51, corresponding to the line oil pressure setting means 160 (the Pd pressure-purpose line oil pressure calculation means 170, the Pin pressure-purpose line oil pressure calculation means 172, the maximum pressure selection means 174). In S51, an oil pressure value obtained by adding the Pd pressure reference margin value Exd, set in S20, to the Pd pressure, set in S10, is calculated as a Pd pressure-purpose line oil pressure $P_{L}d$, and an oil pressure value obtained by adding the needed Pin pressure reference margin value Exin, set in S40, to the needed Pin pressure, calculated in S30, is calculated as a Pin pressure-purpose line oil pressure $P_{L}in$, and the higher of the Pd pressure-purpose line oil pressure $P_{L}d$ or the Pin pressure-purpose line oil pressure $P_{L}in$ is selected, and the selected higher line oil pressure is set as a needed line oil pressure $P_{L}$.

If it is determined that the needed Pin pressure cannot be accurately estimated and thus a negative determination is made in S50, the process proceeds to S52, corresponding to the line oil pressure setting means 160. In S52, the line oil pressure $P_{L}$ is set on the basis of the Pd pressure set from the expression (5) in S10.

As described above, according to this embodiment, effects of the foregoing first embodiment may be achieved. Furthermore, when the needed Pin pressure by the needed Pin pressure calculation means 162 cannot be accurately estimated, the line oil pressure $P_{L}$ is set based on the Pd pressure by the line oil pressure setting means 160. Therefore, when the needed Pin pressure cannot be accurately estimated, for example, when a rotation sensor fails, during a transition in an abrupt shift, such as a power-on downshift or a power-off upshift or the like, or at the time of a manual shift, appropriate line oil pressure $P_{L}$ is set on the basis of only the Pd pressure, so that the deterioration in the shift responsiveness is minimized.

While the example embodiments of the invention have been described in detail with reference to the drawings, the invention is also applicable in other manners.

For example, although in the first embodiment, the needed Pin pressure used is the estimated value calculated by the needed Pin pressure calculation means 162, the needed Pin pressure may instead be the pressure detected by an oil pressure sensor. In a construction where a sensor-detected pressure is used as the needed Pin pressure, the time of failure of the oil pressure sensor for detecting the needed Pin pressure corresponds to the case where the needed Pin pressure cannot be estimated, that is, when the needed Pin pressure by the needed Pin pressure calculation means 162 cannot be accurately estimated.

Furthermore, in the first embodiment an example of the time when the control accuracy of the actual line oil pressure $P_{L}$ with respect to the line oil pressure control command signal $S_{PL}$ declines is when the oil temperature is low and the viscosity of the working oil is high. However, the control accuracy of the actual line oil pressure $P_{L}$ may also decline when the oil temperature is high, because the viscosity of the working oil is low. In such a case, when the temperature of the working oil is high, the Pd pressure reference margin value setting means 166 and the needed Pin pressure reference margin value setting means 168 set larger reference margin values EX than at ordinary oil temperatures. Therefore, appropriate line oil pressure $P_{L}$ is set even when the control accuracy of the actual line oil pressure $P_{L}$ with respect to the line oil pressure control command signal $S_{PL}$ declines.

Furthermore, the input shaft rotational speed $N_{IN}$, the target input shaft rotational speed $N_{IN}^*$ related thereto, etc. in the first embodiment may be replaced by the engine speed $N_E$, the target engine speed $N_E^*$ related thereto, etc., or by the turbine rotational speed $N_T$, the target turbine rotational speed $N_T^*$ related thereto, etc.

Furthermore, although in the first embodiment, the torque converter 14 equipped with the lockup clutch 26 is used as a fluid drive device, the lockup clutch 26 is not required, and furthermore, the torque converter 14 may be replaced by a different fluid-type power transmission device, such as a fluid coupling that does not have a torque amplifying effect, or the like.

While the invention has been described with reference to what are considered to be example embodiments thereof, it is to be understood that the invention is not limited to the described embodiments or constructions. On the contrary, the invention is intended to cover various modifications and equivalent arrangements. In addition, while the various elements of the disclosed invention are shown in various example combinations and configurations, other combinations and configurations, including more, less or only a single element, are also within the spirit and scope of the invention.

**Claims**

1. In a vehicle in which a continuously variable transmission (18) having a primary pulley (42), a secondary pulley (46) and a belt (48) that is wrapped around the two pulleys is disposed on a power transmission path between a vehicle power source (12) and a driving wheel (24R, 24L), a control device (50) of a belt type continuously variable transmission that includes a primary pulley hydraulic cylinder (42c) for altering a groove width of the primary pulley, and a secondary pulley hydraulic cylinder (46c) for altering a groove width of the secondary pulley, and that controls a speed change ratio by the primary pulley hydraulic cylinder and controls a belt clamping pressure by the secondary pulley hydraulic cylinder so that slipping does not occur between the belt and the two pulleys, **characterized by** comprising:

   basic pressure setting means (160) for setting a basic pressure of an oil pressure in the primary pulley hydraulic cylinder and an oil pressure in the secondary pulley hydraulic cylinder based on a higher oil pressure of the oil pressure in the primary pulley hydraulic cylinder and the oil pressure in the secondary pulley hydraulic cylinder.

2. The control device of the belt type continuously variable transmission according to claim 1, wherein the basic pressure setting means sets the basic pressure based on the higher oil pressure of oil pressures obtained by adding predetermined margin values to the oil pressure in the primary pulley hydraulic cylinder and to the oil pressure in the secondary pulley hydraulic cylinder, respectively.

3. The control device of the belt type continuously variable transmission according to claim 2, wherein the predetermined margin value set for the oil pressure in the primary pulley hydraulic cylinder is different from the predetermined margin value set for the oil pressure in the secondary pulley hydraulic cylinder.

4. The control device of the belt type continuously variable transmission according to claim 2 or 3, wherein when a control accuracy of an actual basic pressure with respect to the basic pressure set by the basic pressure setting means declines, the predetermined margin values are set larger than when the control accuracy is high.

5. The control device of the belt type continuously variable transmission according to any one of claims 2 to 4, wherein if the vehicle is running when an abrupt shift is needed, the predetermined margin values are set larger at a time of running of the vehicle during which a sharp shift is needed than at a time of normal steady running of the vehicle.

6. The control device of the belt type continuously variable transmission according to any one of claims 2 to 5, wherein if the vehicle is running when a belt transmission torque does not sharply change, the predetermined margin values are set smaller at a time of running of the vehicle during which a belt transmission torque does not sharply change than at a time of normal steady running of the vehicle.

7. The control device of the belt type continuously variable transmission according to any one of claims 1 to 6, further comprising primary oil pressure estimation means for estimating the oil pressure in the primary pulley hydraulic cylinder,
   wherein when the primary oil pressure estimation means cannot accurately estimate the oil pressure, the basic pressure setting means sets the basic pressure based on the oil pressure in the secondary pulley hydraulic cylinder

8. The control device of the belt type continuously variable transmission according to claim 7, wherein at a time of abrupt shift, the basic pressure setting means sets the basic pressure based on the oil pressure in the secondary pulley hydraulic cylinder.

9. The control device of the belt type continuously variable transmission according to any one of claims 1 to 8, wherein the basic pressure setting means sets an upper limit value of the basic pressure based on a permissible load of the belt, and sets the basic pressure lower than or equal to the upper limit value.

10. In a vehicle in which a continuously variable transmission having a primary pulley, a secondary pulley and a belt that is wrapped around the two pulleys is disposed on a power transmission path between a vehicle power source and a driving wheel, a control method of a belt type continuously variable transmission that includes a primary pulley hydraulic cylinder for altering a groove width of the primary pulley, and a secondary pulley hydraulic cylinder for altering a groove width of the secondary pulley, and that controls a speed change ratio by the primary pulley hydraulic cylinder and controls a belt clamping pressure by the secondary pulley hydraulic cylinder so that slipping does not occur between the belt and the two pulleys, the control method **characterized by** comprising:

setting a basic pressure of an oil pressure in the primary pulley hydraulic cylinder and an oil pressure in the secondary pulley hydraulic cylinder based on a higher oil pressure of the oil pressure in the primary pulley hydraulic cylinder and the oil pressure in the secondary pulley hydraulic cylinder.

EP 1 867 896 A2

# F I G . 1

# FIG.2

| | | |
|---|---|---|
| 52 | ENGINE ROTATION SPEED SENSOR | $N_E$ |
| 54 | TURBINE ROTATION SPEED SENSOR | $N_T$ |
| 56 | INPUT SHAFT ROTATION SPEED SENSOR | $N_{IN}$ |
| 58 | VEHICLE SPEED SENSOR | $V$ |
| 60 | THROTTLE SENSOR | $\theta_{TH}$ |
| 62 | COOLING WATER TEMPERATURE SENSOR | $T_W$ |
| 64 | CVT OIL TEMPERATURE SENSOR | $T_{CVT}$ |

68

66 ACCELERATOR OPERATION AMOUNT SENSOR — $A_{CC}$

70 FOOT BRAKE SWITCH — $B_{ON}$

72 LEVER POSITION SENSOR — $P_{SH}$

74

50 ELECTRONIC CONTROL DEVICE

$S_E$ → 76 THROTTLE ACTUATOR

$S_E$ → 78 FUEL INJECTION DEVICE

$S_E$ → 80 IGNITION DEVICE

→ 82 CRUISE CONTROL

$S_T$ $S_B$ → 100 HYDRAULIC CONTROL CIRCUIT

# FIG.3

PRI.SHEAVE

SEC.SHEAVE

HOME POSITION UPSHIFT

DOWNSHIFT HOME POSITION

STRAINER

EP 1 867 896 A2

# FIG.4

## FIG.5

# FIG.6

168
NEEDED Pin PRESSURE REFERENCE MARGIN VALUE SETTING MEANS

176
LINE OIL PRESSURE CONTROL MEANS

164
ENGINE TORQUE CALCULATION MEANS

172
Pin PRESSURE-PURPOSE LINE OIL PRESSURE CALCULATION MEANS

160
LINE OIL PRESSURE SETTING MEANS (BASIC PRESSURE SETTING MEANS)

162
NEEDED Pin PRESSURE CALCULATION MEANS

174
MAXIMUM PRESSURE SELECTION MEANS

170
Pd PRESSURE-PURPOSE LINE OIL PRESSURE CALCULATION MEANS

150
TARGET INPUT ROTATION SPEED SETTING MEANS

154
BELT CLAMPING PRESSURE FORCE SETTING MEANS

166
Pd PRESSURE REFERENCE MARGIN VALUE SETTING MEANS

152
SHIFT CONTROL MEANS

156
BELT CLAMPING PRESSURE FORCE CONTROL MEANS

158
ENGINE OUTPUT CONTROL MEANS

$S_T$

$S_{PL}$   $S_B$

$S_E$

100
HYDRAULIC CONTROL CIRCUIT

TORQUE CONVERTER   ENGINE   12

CVT

18   16   14

23

# FIG.7

LINE OIL PRESSURE
MAX GUARD

Pd PRESSURE
REFERENCE
MARGIN
VALUE EXd

LINE OIL
PRESSURE
$P_L$

Pd
PRESSURE

NEEDED Pin PRESSURE
REFERENCE MARGIN
VALUE EXin

HYDRAULIC PRESSURE

NEEDED Pd
PRESSURE

$\gamma_{min}$ ←— SPEED CHANGE RATIO —→ $\gamma_{max}$

# FIG.8

ENGINE TORQUE ESTIMATED VALUE $T_{E0}$

$\theta_{TH}$=100%

$\theta_{TH}$=30%

$\theta_{TH}$=5%

ENGINE ROTATION SPEED $N_E$

# F I G . 9

CRUISE CONTROL
COMMAND OUTPUT

CRUISE CONTROL NOT BEING EXECUTED

CRUISE CONTROL BEING EXECUTED

REFERENCE MARGIN VALUE Ex 4

OIL PRESSURE

NEEDED Pin PRESSURE OR Pd PRESSURE

t1

TIME

# FIG.10

START

SET Pd PRESSURE ~S1

SET Pd REFERENCE
MARGIN VALUE ~S2

CALCULATE NEEDED
Pin PRESSURE ~S3

SET NEEDED Pin PRESSURE
REFERENCE MARGIN VALUE ~S4

CALCULATE Pd PRESSURE-PURPOSE LINE OIL
PRESSURE, Pin PRESSURE-PURPOSE LINE OIL
PRESSURE, AND SET MAXIMUM LINE OIL
PRESSURE TO SET NEEDED LINE OIL PRESSURE ~S5

RETURN

EP 1 867 896 A2

# F I G . 11

27

# FIG. 12

168
NEEDED Pin PRESSURE REFERENCE MARGIN VALUE SETTING MEANS

178
NEEDED Pin PRESSURE ACCURACY SECUREMENT DETERMINATION MEANS

176
LINE OIL PRESSURE CONTROL MEANS

164
ENGINE TORQUE CALCULATION MEANS

172
Pin PRESSURE-PURPOSE LINE OIL PRESSURE CALCULATION MEANS

160
LINE OIL PRESSURE SETTING MEANS (BASIC PRESSURE SETTING MEANS)

162
NEEDED Pin PRESSURE CALCULATION MEANS

174
MAXIMUM PRESSURE SELECTION MEANS

170
Pd PRESSURE-PURPOSE LINE OIL PRESSURE CALCULATION MEANS

150
TARGET INPUT ROTATION SPEED SETTING MEANS

154
BELT CLAMPING PRESSURE FORCE SETTING MEANS

166
Pd PRESSURE REFERENCE MARGIN VALUE SETTING MEANS

152
SHIFT CONTROL MEANS

156
BELT CLAMPING PRESSURE FORCE CONTROL MEANS

158
ENGINE OUTPUT CONTROL MEANS

$S_T$

$S_{PL}$   $S_B$

$S_E$

100
HYDRAULIC CONTROL CIRCUIT

CVT

TORQUE CONVERTER   ENGINE   12

16   14

18

EP 1 867 896 A2

# FIG.13

START

SET Pd PRESSURE — S10

SET Pd REFERENCE MARGIN VALUE — S20

CALCULATE NEEDED Pin PRESSURE — S30

SET NEEDED Pin PRESSURE REFERENCE MARGIN VALUE — S40

S50
NEEDED Pin PRESSURE ESTIMATION ACCURACY SECURED?

NO

YES     S51

CALCULATE Pd PRESSURE−PURPOSE LINE OIL PRESSURE, Pin PRESSURE− PURPOSE LINE OIL PRESSURE, AND SET MAXIMUM LINE OIL PRESSURE TO SET NEEDED LINE OIL PRESSURE

S52

SET LINE OIL PRESSURE BASED ON Pd PRESSURE

RETURN

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6109114 A